# EUROPEAN PATENT APPLICATION

(11) **EP 4 274 298 A1**
(43) Date of publication of application: **08.11.2023**
(21) Application number: 23171820.6
(22) Date of filing: 05.05.2023
(51) Int. Cl.: H04W 28/02, H04W 28/08, H04W 28/24

(54) **MECHANISM FOR SETTING TIME DEPENDENT QUALITY OF SERVICE**

(30) Priority: 06.05.2022 IN 202241026449
(71) Applicant: Nokia Technologies Oy, 02610 Espoo (FI)
(72) Inventor: KAHN, Colin, Morris Plains, 07950 (US); RAVINDRAN, Parthasarathi, 560017 Bengaluru (IN); KHARE, Saurabh, 560043 Bangalore (IN); PAPAGEORGIOU, Apostolos, 81541 Munich (DE); BELLING, Horst Thomas, 85435 Erding (DE)
(74) Representative: Nokia EPO representatives

(57) **Abstract**

An apparatus for use by an application function network element or application function network function of a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to determine, for a data communication to be conducted with at least one communication element or communication function, traffic pattern information indicating a time setting for the data communication and quality of service, QoS, information to be provided for the data communication, and to send, to a communication network control element or communication network control function, a request for providing resources at a specified time according to the determined traffic pattern information.

## Description

### FIELD

Examples of the disclosure relate to apparatuses, methods, systems, computer programs, computer program products and (non-transitory) computer-readable media usable for improving setting of a quality of service for a communication. Specifically, some examples of the disclosure are related to apparatuses, methods, systems, computer programs, computer program products and (non-transitory) computer-readable media usable for allowing to set a time dependent quality of service for a communication.

### BACKGROUND

The following meanings for the abbreviations used herein apply:
- 3GPP: 3^{rd} Generation Partnership Project
- 4G: fourth generation
- 5G: fifth generation
- 5GC: 5G core
- 5GS: 5G system
- AI: artificial intelligence
- AF: application function
- AMF: access and mobility management function
- AN: access network
- BS: base station
- CPU: central processing unit
- eNB: E-UTRAN Node B
- FL: federated learning
- FLAF: FL assistance function
- GBR: guaranteed bit rate
- GFBR: guaranteed flow bit rate
- gNB: next generation node B
- IP: Internet protocol
- KPI: key point indicator
- LTE: Long Term Evolution
- LTE-A: LTE Advanced
- ML: machine learning
- NEF: network exposure function
- NF: network function
- NG: next generation
- NW: network, network side
- NWDAF: network data analytics function
- PCC: policy and charging control
- PCF: policy control function
- PDB: packet delay budget
- PDR: packet detection rule
- PER: packet error rate
- QoS: quality of service
- RAN: radio access network
- SLA: service level agreement
- SMF: session management function
- TSCTSF: time sensitive communication and time synchronization function
- UDM: unified data management
- UE: user equipment
- UPF: user plane function

### SUMMARY

According to an example of an embodiment, there is provided, for example, an apparatus for use by an application function network element or application function network function of a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to determine, for a data communication to be conducted with at least one communication element or communication function, traffic pattern information indicating a time setting for the data communication and quality of service, QoS, information to be provided for the data communication, and to send, to a communication network control element or communication network control function, a request for providing resources at a specified time according to the determined traffic pattern information.

Furthermore, according to an example of an embodiment, there is provided, for example, a method for use in an application function network element or application function network function of a communication network, the method comprising determining, for a data communication to be conducted with at least one communication element or communication function, traffic pattern information indicating a time setting for the data communication and quality of service, QoS, information to be provided for the data communication, and sending, to a communication network control element or communication network control function, a request for providing resources at a specified time according to the determined traffic pattern information.

According to further refinements, these examples may include one or more of the following features:
- the request may comprise communication related information and at least a first set of QoS related information to be considered during a time specified in the communication related information, wherein the communication related information may comprise at least one of a data communication start time, a data communication stop time, a data communication periodicity, a data communication direction, a data size indication, and the QoS related information comprises at least one of requested bandwidth, an error rate, delay information, a guaranteed bit rate;
- the request may further comprise a second set of QoS related information to be considered during a time being different to the time specified in the communication related information;
- the request may comprise communication related information and QoS related information for a data communication with one communication element or communication function, or the request comprises a plurality of communication related information sets and QoS related information sets for a plurality of data communications with a plurality of communication elements or communication functions;
- an indication of one or more communication elements or communication functions with which the data communication is to be conducted may be received;
- as the communication network control element or communication network control function to which the request for providing resources at a specified time is sent, one of a network exposure function, a policy control function, an assistance network function associated to the data communication, and a time sensitive communication and time synchronization function may be selected, wherein a content of the request may be adapted to the selected communication network control element or communication network control function.

According to an example of an embodiment, there is provided, for example, an apparatus for use by a first communication network control element or first communication network control function of a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to receive a request for providing resources at a specified time according to traffic pattern information for a data communication to be conducted with at least one communication element or communication function, the traffic pattern information indicating a time setting for the data communication and QoS information to be provided for the data communication, to derive, from the request, time dependent QoS request information allowing a policy control function of the communication network to determine policy and charging rules for the data communication, and to deliver the derived time dependent QoS request information to the policy control function of the communication network.

Furthermore, according to an example of an embodiment, there is provided, for example, a method for use in a first communication network control element or first communication network control function of a communication network, the method comprising receiving a request for providing resources at a specified time according to traffic pattern information for a data communication to be conducted with at least one communication element or communication function, the traffic pattern information indicating a time setting for the data communication and QoS information to be provided for the data communication, deriving, from the request, time dependent QoS request information allowing a policy control function of the communication network to determine policy and charging rules for the data communication, and delivering the derived time dependent QoS request information to the policy control function of the communication network.

According to further refinements, these examples may include one or more of the following features:
- the request may comprise communication related information and at least a first set of QoS related information to be considered during a time specified in the communication related information, wherein the communication related information may comprise at least one of a data communication start time, a data communication stop time, a data communication periodicity, a data communication direction, a data size indication, and the QoS related information comprises at least one of requested bandwidth, an error rate, delay information, a guaranteed bit rate;
- the request may further comprise a second set of QoS related information to be considered during a time being different to the time specified in the communication related information
- the request may comprise communication related information and QoS related information for a data communication with one communication element or communication function, or the request comprises a plurality of communication related information sets and QoS related information sets for a plurality of data communications with a plurality of communication elements or communication functions;

- the time dependent QoS request information may be derived by converting information included in the communication related information and the QoS related information of the request into time dependent QoS request information;
- an authorization procedure for the request being received may be conducted;
- at least one policy control function handling a communication element or communication function involved in the data communication may be selected, and the derived time dependent QoS request information may be delivered to the selected policy control function;
- the communication network control element or communication network control function may be one of a network exposure function, an assistance network function associated to the data communication, and a time sensitive communication and time synchronization function.

According to an example of an embodiment, there is provided, for example, an apparatus for use by a second communication network control element or second communication network control function acting as a policy control function of a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to receive time dependent QoS request information indicating resources for a data communication with at least one communication element or communication function to be conducted at a specified time, to determine at least one policy and charging control rule for a communication session on the basis of the time dependent QoS request information, the at least one policy and charging control rule comprising QoS applicability time information, and to forward the at least one policy and charging control rule to a third communication network control element or third communication network control function configured to manage the communication session.

Furthermore, according to an example of an embodiment, there is provided, for example, a method for use in a second communication network control element or second communication network control function acting as a policy control function of a communication network, the method comprising receiving time dependent QoS request information indicating resources for a data communication with at least one communication element or communication function to be conducted at a specified time, determining at least one policy and charging control rule for a communication session on the basis of the time dependent QoS request information, the at least one policy and charging control rule comprising QoS applicability time information, and forwarding the at least one policy and charging control rule to a third communication network control element or third communication network control function configured to manage the communication session.

According to further refinements, these examples may include one or more of the following features:
- the at least one policy and charging control rule request may comprise information including at least one of a data communication start time, a data communication stop time, a data repetition period for a QoS to be applied, a data communication duration, an indication of a data volume to be expected during a time period when the QoS is applied, an error rate, delay information, a guaranteed bit rate;
- a plurality of policy and charging control rules for a plurality of communication session may be determined on the basis of the time dependent QoS request information, wherein each of the plurality of policy and charging control rules may comprise dedicated QoS applicability time information;
- the time dependent QoS request information may be received from a communication network control element or communication network control function including one of a network exposure function, an assistance network function associated to the data communication, a time sensitive communication and time synchronization function, or from an application function network element or application function network function requesting the data communication.

According to an example of an embodiment, there is provided, for example, an apparatus for use by a third communication network control element or third communication network control function configured to manage a communication session in a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to receive at least one policy and charging control rule for a communication session, the at least one policy and charging control rule comprising QoS applicability time information, to generate at least one QoS profile for a communication session by mapping information contained in the received at least one policy and charging control rule to the at least one QoS profile, wherein the at least one QoS profile is applicable at a specific time indicated in the at least one policy and charging control rule, and to send the at least one QoS profile to a fourth communication network control element or fourth communication network control function configured to operate as an access network controller for a communication element or communication function.

Furthermore, according to an example of an embodiment, there is provided, for example, a method for use in a third communication network control element or third communication network control function configured to manage a communication session in a communication network, the method comprising receiving at least one policy and charging control rule for a communication session, the at least one policy and charging control rule comprising QoS applicability time information, generating at least one QoS profile for a communication session by mapping information contained in the received at least one policy and charging control rule to the at least one QoS profile, wherein the at least one QoS profile is applicable at a specific time indicated in the at least one policy and charging control rule, and sending the at least one QoS profile to a fourth communication network control element or fourth communication network control function configured to operate as an access network controller for a communication element or communication function.

According to further refinements, these examples may include one or more of the following features:
- the at least one QoS profile may comprise information including at least one of a data communication start time, a data communication stop time, a data repetition period for the QoS profile to be applied, a data communication duration, an indication of a data volume to be expected during a time period when the QoS profile is applied, an indication of a data volume to be expected during a time period when the QoS is applied, an error rate when the QoS profile is applied, delay information to be considered when the QoS profile is applied, and a guaranteed bit rate when the QoS profile is applied;
- in addition to the QoS profile, traffic pattern information or a timing map for applying the at least one QoS profile may be provided;
- a first QoS profile for the communication session which is applicable at the specific time indicated in the at least one policy and charging control rule, and a second QoS profile for the communication session which is applicable at a time being different to the specific time indicated in the at least one policy and charging control rule may be generated, wherein resources for the first QoS profile may be different to resources for the second QoS profile;

According to an example of an embodiment, there is provided, for example, an apparatus for use by a fourth communication network control element or fourth communication network control function configured to operate as an access network controller for a communication element or communication function in a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to receive at least one QoS profile for a communication session, wherein the at least one QoS profile is applicable at a specific time, to allocate resources for a communication session according to the received at least one QoS profile, and to execute a time dependent QoS according to the received at least one QoS profile in the specific time.

Furthermore, according to an example of an embodiment, there is provided, for example, a method for use in a fourth communication network control element or fourth communication network control function configured to operate as an access network controller for a communication element or communication function in a communication network, the method comprising receiving at least one QoS profile for a communication session, wherein the at least one QoS profile is applicable at a specific time, allocating resources for a communication session according to the received at least one QoS profile, and executing a time dependent QoS according to the received at least one QoS profile in the specific time.

According to further refinements, these examples may include one or more of the following features:
- the at least one QoS profile may comprise information including at least one of a data communication start time, a data communication stop time, a data repetition period for the QoS profile to be applied, a data communication duration, an indication of a data volume to be expected during a time period when the QoS is applied, an error rate when the QoS profile is applied, delay information to be considered when the QoS profile is applied, and a guaranteed bit rate when the QoS profile is applied;
- in addition to the at least one QoS profile, traffic pattern information or a timing map for applying the at least one QoS profile may be received, and in case traffic pattern information is received, a timing map for applying the at least one QoS profile may be formulated on the basis of the traffic pattern information;
- a first QoS profile for the communication session which is applicable at the specific time, and a second QoS profile for the communication session which is applicable at a time being different to the specific time may be received, wherein resources for the first QoS profile may different to resources for the second QoS profile, and there may be a switch between an allocation of resources for a communication session according to the first QoS profile and an execution of a time dependent QoS according to the first QoS profile and an allocation of resources for a communication session according to the second QoS profile and an execution of a time dependent QoS according to the second QoS profile according to timing information for applying a corresponding QoS profile.

In addition, according to embodiments, there is provided, for example, a computer program product for a computer, including software code portions for performing the steps of the above defined methods, when said product is run on the computer. The computer program product may include a computer-readable medium on which said software code portions are stored. Furthermore, the computer program product may be directly loadable into the internal memory of the computer and/or transmittable via a network by means of at least one of upload, download and push procedures.

### BRIEF DESCRIPTION OF THE DRAWINGS

Some embodiments of the present disclosure are described below, by way of example only, with reference to the accompanying drawings, in which:
Fig. 1 shows a diagram illustrating an example of a network architecture in which examples of embodiments are implementable;
Fig. 2 shows a signaling diagram illustrating an example of a QoS setting procedure according to examples of embodiments;
Fig. 3 shows a signaling diagram illustrating an example of a QoS setting procedure according to examples of embodiments;
Fig. 4 shows a signaling diagram illustrating an example of a QoS setting procedure according to examples of embodiments;
Fig. 5 shows a flow chart of a processing conducted in an application function requesting resources for a communication according to some examples of embodiments;
Fig. 6 shows a flow chart of a processing conducted in a network function involved in a QoS setting procedure according to some examples of embodiments;
Fig. 7 shows a flow chart of a processing conducted in a policy control function involved in a QoS setting procedure according to some examples of embodiments;
Fig. 8 shows a flow chart of a processing conducted in a session management function involved in a QoS setting procedure according to some examples of embodiments;
Fig. 9 shows a flow chart of a processing conducted in a radio access network element involved in a QoS setting procedure according to some examples of embodiments;
Fig. 10 shows a diagram of a network element or network function, acting as an application function requesting resources for a communication according to some examples of embodiments;
Fig. 11 shows a diagram of a network element or network function, being a network function involved in a QoS setting procedure according to some examples of embodiments;
Fig. 12 shows a diagram of a network element or network function, acting as a policy control function involved in a QoS setting procedure according to some examples of embodiments;
Fig. 13 shows a diagram of a network element or network function, acting as a session management function involved in a QoS setting procedure according to some examples of embodiments; and
Fig. 14 shows a diagram of a network element or network function, acting as a radio access network element involved in a QoS setting procedure according to some examples of embodiments.

### DETAILED DESCRIPTION

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

Quality of service (QoS) defines a performance of a communication service, such as a data transmission service, from the user side. To quantitatively measure quality of service, several related aspects of the network service are to be considered, such as packet loss, bit rate, throughput and the like. Depending on which type of service is requested, the network provides different QoS settings leading to respective different resource allocations, for example.

There may be cases where a different levels of QoS may be acceptable for a certain service. Conventionally, in this situation alternative QoS profiles are set. If the GFBR cannot be guaranteed anymore by the RAN (e.g. the gNB), the gNB indicates to the network (e.g. the SMF) an alternative QoS profile. This procedure requires a core network function, such as the SMF, to indicate to the gNB the acceptable profiles and then in turn the gNB to notify the SMF the alternative QoS that is being used. The change of QoS profile in this case is triggered by an event at the gNB (e.g. the gNB cannot offer the GFBR anymore).

For example, QoS profiles sent to the RAN may contain a priority level, delay budget, packet error rate and other parameters that are applicable at all times. For delay critical GBRs a maximum data burst volume may be specified.

However, when a QoS is desired only at certain times, which is also referred to hereinafter as implementing a time dependent QoS, the conventional procedure in communication networks, such as 3GPP based networks, require a frequent changing of the QoS profiles, which involves signalling between the network elements, such as the PCF/SMF, and the NG-RAN.

A possible example of a situation where time dependent QoS is useful is, for example, and AI/ML model transfer and a support for federated learning. It is to be noted that that AI/ML model transfer represents only an example where time dependent QoS reservation may be used, but is it evident that also other applications are conceivable where time dependent QoS reservation is applicable, e.g. applications having a similar deterministic behavior and resource utilization.

AI/ML model transfer and support for federated learning requires a brief (e.g. for about one second), periodic (e.g. once every few minutes) use of a significant amount of 5GS resources, due to the high data volume to be transferred. As indicated above, present communication networks allow this to be achieved only by frequent changing of the QoS profiles. Therefore, it is desirable to provide measures allowing to support time dependent QoS where resources are reserved for brief, proscribed time periods and not allocated for other time periods.

In other words, it is an aim to enable an AF to request time dependent QoS, for example for applications such as AI/ML model transfer, so as to provide a guaranteed 5GS performance while it is possible to share 5GS resources among a group of UEs by staggering in time when model transfer occurs.

To explain the reason for this, in the following, AIML model/data transfer between mobile devices and an application server is described.

AIML model/data transfer is required, for example, for federated learning to support image/speech/video recognition. The volume of model/data information that needs to be sent, may be very large and different for the uplink and downlink. The model/data information has be sent with a sufficient QoS to meet the demands of the AI/ML application.

For example, performance requirements for AI/ML model transfer are documented in 3GPP specification TS 22.261 wherein specific requirements are indicated in tables below.

For split AI/ML inference between UE and a network server/application function the performance requirements are as indicated in the following Table 1.

**Table 1: KPI Table of split AI/ML inference between UE and Network Server/Application function**

| **Uplink KPI** | | | | | **Downlink KPI** | | | | **Remarks** |
|---|---|---|---|---|---|---|---|---|---|
| **Max allowe d UL end-to-end latency** | **Experience d data rate** | **Payload size** | **Communi cation service availability** | **Reliabilit y** | **Max allowe d DL end-to-end latency** | **Experienced data rate** | **Payloa d size** | **Reliabilit y** | |
| 2 ms | 1.08 Gbit/s | 0.27 MByte | 99.999 % | 99.9 % | | | | 99.999 % | Split AI/ML image recognition |
| 100 ms | 1.5 Mbit/s | | | | 100 ms | 150 Mbit/s | 1.5 MByte/ frame | | Enhanced media recognition |
| | 4.7 Mbit/s | | | | 12 ms | 320 Mbit/s | 40 kByt e | | Split control for robotics |
| NOTE 1: | Communication service availability relates to the service interfaces, and reliability relates to a given system entity. | | | | | | | | |
| | One or more retransmissions of network layer packets can take place in order to satisfy the reliability requirement. | | | | | | | | |

For AI/ML model downloading, performance requirements are given in Table 2 indicated below.

**Table 2: KPI Table of AI/ML model downloading**

| **Max allowed DL end-to-end latency** | **Experienced data rate (DL)** | **Model size** | **Communication service availability** | **Reliability** | **User density** | **# of downloaded Al/ML models** | **Remarks** |
|---|---|---|---|---|---|---|---|
| 1s | 1.1Gbit/s | 138MByte | 99.999 % | 99.9% for data transmission of model weight factors; 99.999% for data transmission of model topology | | | Al/ML model distribution for image recognition |
| 1s | 640Mbit/s | 80MByte | 99.999 % | | | | AI/ML model distribution for speech recognition |
| 1s | 512Mbit/s(see note 1) | 64MByte | | | | Parallel download of up to 50 AI/ML models | Real time media editing with on-board Al inference |
| 1s | | 536MByte | | | up to 5000-~10000/km2 in an urban area | | Al model management as a Service |
| 1s | 22Mbit/s | 2.4MByte | 99.999 % | | | | Al/ML based Automotive Networked Systems |
| 1s | | 500 MByte | | | | | Shared Al/ML model monitoring |
| 3s | 450Mbit/s | 170MByte | | | | | Media quality enhancement |
| NOTE 1: 512Mbit/s concerns Al/ML models having a payload size below 64 MB. TBD for larger payload sizes. | | | | | | | |
| NOTE 2: Communication service availability relates to the service interfaces, and reliability relates to a given system entity. One or more retransmissions of network layer packets can take place in order to satisfy the reliability requirement. | | | | | | | |

For federated learning between UE and network server/application function, performance requirements are given in the following Table 3.

**Table 3: KPI Table of Federated Learning between UE and Network Server/Application function**

| **Max allowed DL or UL end-to-end latency** | **DL experienced data rate** | **UL experienced data rate** | **DL packet size** | **UL packet size** | **Communication service availability** | **Remarks** |
|---|---|---|---|---|---|---|
| 1s | 1.0Gbit/s | 1.0Gbit/s | 132 M Byte | 132MByte | | Uncompressed Federated Learning for image recognition |
| 1s | 80.88Mbit/s | 80.88Mbit/s | 10Mbyte | 10Mbyte | TBD | Compressed Federated Learning for image/video processing |
| 1s | TBD | TBD | 10MByte | 10 M Byte | | Data Transfer Disturbance in Multi-agent multi-device ML Operations |

In order to meet the above indicated requirements, which may occupy a significant amount of resources in the network, QoS and policy enhancements are necessary to support application AI/ML operation traffic for AI/ML model transfer.

Besides the above indicated goal to provide a possibility to support time dependent QoS where resources are reserved for brief, proscribed time periods and not allocated for other time periods, also the following is to be considered.

Usually, application functions, such as an AI/ML application function, knows the characteristic of process in which they are involved; that is, for example, the AI/ML application function knows the AI/ML model and its corresponding operations. It is possible that the respective application function, such as the AI/ML AF, is developed in a 3^{rd} party ecosystem wherein 5G core quality of service (QoS) SLAs that determine QoS references that may be requested by the AF are not known to the AF. Thus, a developer of the AF (e.g. of the AI/ML AF) would be required to understand QoS references for an effective usage. Consequently, it is desirable that also a framework to convert requirements for the AF (e.g. for the AI/ML AF) to parameters, such as PCC rules and QoS profiles, used in the communication network. As an example, when a regular interval for data transmissions in the application is demanded, a corresponding periodicity parameter for the communication network setting is to be defined.

Moreover, there are situations where e.g. a plurality of UEs, such as a group of AI-ML UEs with a common traffic pattern of AI/ML federated learning at the same designated time would be present. In this case, in order to avoid that an overload situation in the RAN occurs for a given period, e.g. due to a high number of UEs requiring a high volume traffic at the same time, it is useful to consider a mechanism allowing to stagger in time periodic transmissions needed for the application, such as for federated learning.

Consequently, according to examples of the disclosure, an improved procedure to support time dependent QoS is to be provided which allows to reduce a signaling load between the core network and the RAN and which allows a more efficient use of resources. Furthermore, according to examples of the disclosure, measures allowing a more efficient multiplexing of groups of UEs that need to transfer data, such as AI/ML models, is desirable.

In the following, different exemplifying embodiments will be described for illustrating a processing for improving a mechanism for QoS setting considering a time dependency. For this, as an example of a communication network to which examples of embodiments may be applied, a communication network architecture based on 3GPP standards for a communication network, such as 5G/NR, is used, without restricting the embodiments to such an architecture, however. It is obvious for a person skilled in the art that the embodiments may also be applied to other kinds of communication networks, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication networks as well.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as communication elements, user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as session management elements/functions, policy control elements/functions, assistance functions, servers, databases and the like may be included.

The general functions and interconnections of the described elements and functions, which also depend on the actual network type, would be apparent to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet, as well as with individual devices or groups of devices being not considered as a part of a network, such as monitoring devices like cameras, sensors, arrays of sensors, and the like. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element or network functions, such as a core network element or core network function like a PCF, SMF, or an application function, or other network elements or network functions, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case-by-case.

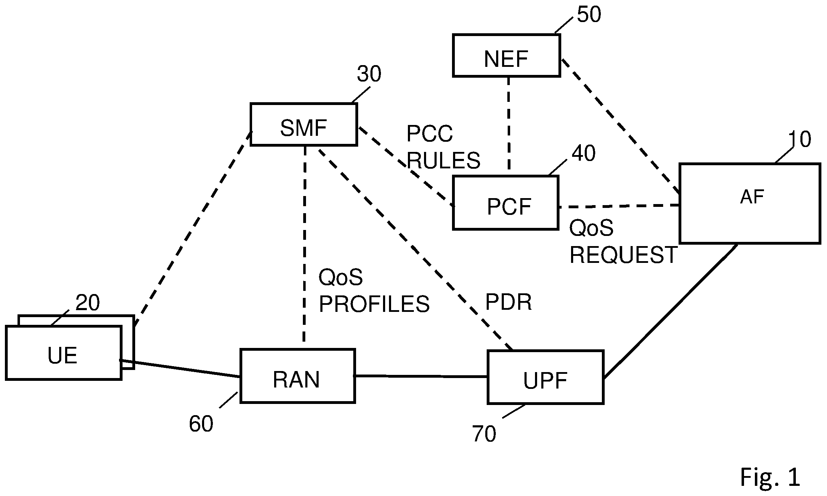

Fig. 1 shows a diagram illustrating an example of a system architecture of a communication network based on 3GPP in which examples of the disclosure are implementable. It is to be noted that the example architecture in Fig. 1 shows those parts of a complete network architecture which are useful for understanding principles of embodiments of the disclosure, while other elements and interfaces are omitted in the illustration. Specifically, Fig. 1 shows a 3GPP 5G based network in which an application function can conduct a data communication with one or more communication elements or functions, such as UEs.

As shown in Fig. 1, the 5G network comprises, amongst others, the following elements or functions.

One or more communication elements or communication functions, such as a UE 20, is/are connected to a RAN or access network 60 and to an session management function 30.

The UE 20 may, for example, be implemented by any device or function used directly by an end-user to communicate, such as a handheld phone, laptop, and so forth.

The RAN 60 provides a radio technology that allows access to the core network, and represents a base station (BS or NB) using a NR radio access technology and/or an evolved LTE base station, or a general base station including e.g. non-3GPP access, e.g., Wi-Fi or an access network termination.

The core network architecture shown in Fig. 1 (e.g. implemented as a 5GS network) comprises various NFs. As shown in Figs. 1, the CN NFs comprise (amongst others) the SMF 30, a policy control function (PCF) 40, a network exposure function (NEF) 50, one or more user plane function(s) (UPF) 70. Furthermore, as shown in Fig, 1, an application function 10 is provided.

The SMF 30 is a function which sets up and manages sessions according to network policy. The SMF 30 is responsible, for example, for session management and allocates IP addresses to UEs. Furthermore, it selects and controls the UPF 70 for data transfer, and controls policy enforcement. It is to be noted that it is also possible that in case the UE 10 has e.g. multiple sessions (communication connections), different SMFs may be allocated to each session to manage them individually and possibly provide different functionalities per session.

The PCF 40 is a function which provides a policy framework incorporating network slicing, roaming and mobility management, akin to a policy and charging rules function in a 4G network. It governs the network behavior by supporting a unified policy framework.

The UPF 70 can be deployed in various configurations and locations, according to the service type. Functions of the UPF 70 include e.g. QoS handling for user plane, packet routing and forwarding, packet inspection and policy rule enforcement, traffic accounting and reporting.

The NEF 50 is used for exposing network capabilities and events to an AF.

The AF 10 is, for example, an AF which conducts a data communication with one or more of the UEs 20 and may be, as an example, an AI/ML AF or any other AF which requires a time dependent QoS for communication with the UE.

As shown in Fig. 1, the NFs can be connected by means of so-called reference points or interfaces via which different messages or data are exchanged. For example, the interface between the SMF 30 and the PCF 40 allows to transfer PCC rules to the SMF 30. A PCC rule is a set of information enabling the detection of a service data flow and providing parameters for policy control and/or charging control and/or other control or support information.

The interface between the PCF 40 and the AF 10 allows to transfer QoS requests to the PCF 40. The interface between the SMF 30 and the UPF 70 allows to transfer PDRs to the UPF 70. A PDR contains information required to classify a packet arriving at a user plane function and comprises various amounts of information depending upon the user function type.

The interface between the SMF 30 and the RAN 60 allows to transfer QoS profiles to the RAN 60.

According to examples of embodiments of the disclosure, measures for setting a time dependent QoS are provided whereby resources can be reserved for proscribed periods in the communication network. That is, it is possible to meet requirements of applications requiring a specific performance in a specific time, such as in the case of an AI/ML model transfer, which requires brief, periodic use of a significant amount of 5GS resources. By reserving resources at specific times, a more efficient multiplexing of groups of UEs can be achieved that need to transfer data, such as AI/ML models.

One example for a basic concept of the measures for setting a time dependent QoS is as follows. The AF which needs to have resources allocated (such as an AF that performs AI/ML model transfer to UEs in federated learning) sends to the CN (NEF, PCF, or an assistance network function such as an AI/ML NF or TSSCTSF (to be described later) information indicating QoS requirements and information regarding a time setting when a specific QoS is required. The time information may have different forms and can be, for example, a start and end time or a periodicity of a data transfer.

In the network, the PCF converts the information comprised in the received request into a PCC rule, which includes the time dependency indicated in the QoS requirements. That is, a mapping between the QoS requirements and the time at which the QoS requirements have to be fulfilled is made by the PCF, wherein the resulting PCC rule(s) is/are sent to the SMF.

The SMF generates QoS profiles on the basis of the PCC rules, wherein each of the QoS profiles is associated to the applicability times indicated in the original request. The QoS profiles are then provided to the RAN (e.g. a gNB).

The RAN uses the QoS profiles to allocate resources for a data communication between the AF and the UE, wherein the time dependency is considered. That is, the RAN (e.g. the gNB) can change the QoS profiles at the time agreed upon by the SMF.

That is, according to examples of embodiments of the disclosure, time information associated to a plurality of QoS requirements from an AF are considered in the QoS setting procedure which allows the RAN to automatically change the QoS at specific times agreed beforehand with the SMF. Due to this, a signaling load in the network can be reduced as the gNB does not need to notify the SMF upon changing the QoS profile and the SMF does not need to install on the gNB new profiles every time the required QoS needs to be changed. Furthermore, a more efficient use of resources is possible by dynamically upgrading / downgrading the QoS based on the AF needs.

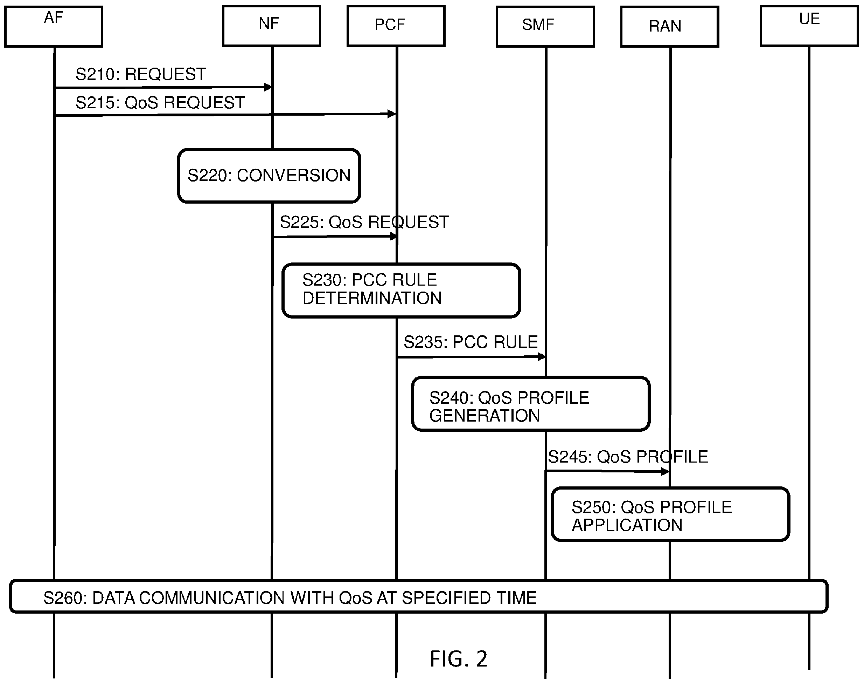

Referring to Fig. 2, a signaling diagram is shown illustrating an example of a QoS setting procedure according to examples of embodiments.

At the beginning, an AF determines that for a data communication to be conducted with another party, such as one or more UEs, a specific traffic pattern is desired or necessary, which includes, for example, specific requirements regarding the data volume to be transferred, and a specific timing, such as for example a brief, periodic use of a significant amount of 5GS resources. As an example referred to already above, an AI/ML model/data transfer is concerned.

Due to this determination, the AF sends a request to the communication network in which it requests corresponding resources. For example, the AF sends in S210 a containing traffic pattern information for the data transfer (e.g., when a model transfer is considered as an example, information regarding a model size, a transfer direction (to or from the AF), a model transfer periodicity, start time(s), stop time(s) and QoS requirements, such as a bandwidth required, PER, 5GS delay, GBR, etc.). According to some further examples, the AF may also specify QoS requirements for periods when the specific data transfer (e.g. a transfer) model is not being transferred. The request in S210 is transferred to an NF in the communication network which is able to understand the information in the request and to convert it into data which are usable for controlling settings in the communication network (see S220). For example, in S220, a conversion of the received information into a QoS request format (referred to as to a time-dependent QoS request) is made by the NF in question. Examples of such an NF comprises, for example, an assistance function related to the type of data communication, such as a AI-ML assistance function, or a TSCTSF (described later). In case the AF is an untrusted NF, the request can also be forwarded to the NEF for authorization. In S225, the QoS request is forwarded to a PCF.

Alternatively, in case the AF is able to generate a suitable QoS request (i.e. a time-dependent QoS request), the corresponding request can be forwarded to the PCF as well (see S215), wherein the QoS request in S215 comprises also time related information as indicated above. As a further alternative, the PCR as such is configured to translate information provided in the form of traffic pattern information into suitable parameters.

In S230, the PCF processes the received time-dependent QoS request. That is, the PCF uses the information in the time-dependent QoS request in order to provide one or several PCC rule(s) to the SMF (see S235). According to examples of embodiments, the PCC rule contents may be enhanced to include applicable QoS Parameters, a start time, a duration, and repetition period for each QoS to be applied. QoS parameters that vary between QoS may for example include GBR, PER and PDB, and possibly additional parameters.

In S240, the SMF processes the PCC rules received in S235 and maps the information received from the PCF to one or several QoS profiles. For example, the PCF provides on the basis of the traffic pattern information QoS applicability time(s), which are reflected in the PCC rule sent from the PCF to the SMF. As a further option, the PCF also includes information about a data volume to be expected during a time period in the QoS profile.

At least one QoS profile generated by the SMF is that which is applicable only at times which are indicated by the AF (e.g., via start time, duration, and possible repetition period). For example, the SMF can generate one QoS profile applicable for the time during which data, such as model(s), are transferred. Another (e.g. a second) QoS profile is generated which is applicable when the data in question (e.g. the models) are not transferred.

In S245, the SMF sends the QoS profiles to the NG-RAN. In this connection, the SMF can send either the traffic pattern information or a QoS profile timing map for providing information regarding the times when the QoS profile is to be employed.

In case the SMF sends the traffic pattern Information, the NG-RAN formulates a suitable QoS profile timing map. The QoS profiles may for example contain different values of GBR, PER and PDB to be applied according to the timing map.

In S250, the NG-RAN applies the QoS profiles. For example, in case there are provided a first QoS profile for the specific times when the data transfer in question (e.g. model transfer) is planned, and a second QoS profile for other times (i.e. when the data transfer in question is not conducted), the NG RAN can alternate between these QoS profiles provided by the SMF according to the timing map. As an example, the timing map indicates, for example, to alternate the QoS profiles as follows:
QoS 1: Time 2:30:30 to 2:30:35 (five seconds)
QoS 2: Time 2:30:33 to 2:40:00 (10 minutes)

It is to be noted that the respective QoS profiles may be different to each other, for example, QoS 1 provides a high amount of resources for model transfer while QoS 2 provides a lower amount of resources e.g. for low bandwidth background traffic.

That is, as indicated in S260, the data communication intended by the AF can be conducted with the QoS settings to the suitable, i.e. specified times.

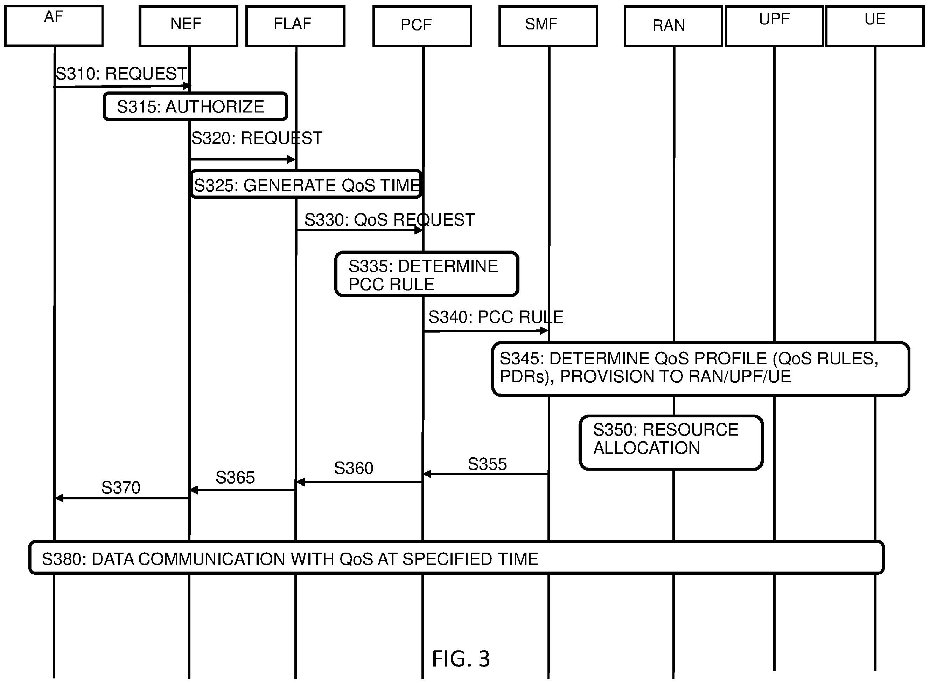

Referring to Fig. 3, a signaling diagram is shown illustrating a further example of a QoS setting procedure according to examples of embodiments. Specifically, Fig. 3 shows an adaptive QoS callflow where the procedure for setting up an AF session for QoS in case of a AI/ML application for e.g. model transfer is conducted.

In S310, the AF sends a request for a communication session with a QoS to the network. The request comprises information regarding target UE(s), the required QoS, and QoS time dependency information. QoS requirements with time dependency information comprises, for example, a bandwidth being required, PER, 5GS delay, GBR, a model transfer periodicity etc., together with period(s) during which these requirements shall be valid (that is, as described above, a reqQoS1 for a time when an ML model data transfer is taking place and (optionally) also a reqQoS2 for the rest of the time).

Alternatively, instead of detailed QoS requirements (with a respective time map), the AF may send traffic pattern information (e.g. for model transfer, model size, model transfer periodicity, start time(s), duration(s), stop time(s), and/or periodicity of model transfer). The information may contain an indication that the information content can be translated to time-dependent QoS requirements in the 5GC.

It is to be noted that the AF may provide the information indicated above for a data communication with a single UE, or for one or more data communication with a list or group of UEs. In case the AF provides in the request in S310a list of UEs, it may indicate different periods during which these requirements shall be valid or time of model transfer for different UEs within the list.

Depending on the circumstances, the AF can send the request in S310 to different recipients on the network side. For example, as also shown in Fig. 3, the request is sent to an NEF, which is to be preferred to when the AF is not trusted. Alternatively, the request can be sent to a specific assistance function related to the respective AF or the communication connection intended by it. For example, a AI/ML NF (e.g., a Federated Learning Assistance Function, FLAF) can be selected as a recipient which is able, for example, to process the information contained in the request in a manner that it is useable for the QoS setting. As another alternative, the recipient can be a Time Sensitive Communication and Time Synchronization Function (TSCTSF). As still a further alternative, the request can be sent to a PCF. For example, the AF can use the an external parameter provisioning procedure as described in 3GPP TS 23.502 to provide the information contained in the request message e.g. via NEF and a UDM towards the PCF.

In S315, in the present example, when the AG is an untrusted AF, the request is received by the NEF which authorizes the AF request as per the standard procedures.

In S320, the NEF forwards the (authorized) request for a session with QoS to a network element or network function also referred to as first communication network control element or first communication network control function which is in the present example, an AI/ML NF (e.g., a FLAF). As indicated above, the request may also be sent to a TSCTSF or even a PCF handling involved UEs. It is to be noted that NEF UDR parameter provisioning shall be followed for handling offline UE.

In S325, a process for generation or adaptation of a QoS time is executed.

If the request is sent in S320 to to the AI/ML NF, e.g. a FLAF, this NF may select involved UEs from the indication of UEs received in S320. Ten, the information provided in the request for model transfer is mapped to QoS information.

Otherwise, when, for example, a TSCTSF is contacted in S320, the TSCTSF interacts with a PCF to perform the functions for generation or adaptation of a QoS time to select PCF(s), authorize QoS and provide time and periodicity for time dependent QoS.

Alternatively, if the PCF is contacted directly in S320, the PCF authorizes QoS and uses the information in the request from the AF (or NEF) to determine a QoS timing and periodicity (this refers to a process in S335 described below).

In S330, in the example of Fig. 3, the FLAF, after selecting PCFs handling involved UEs, sends a QoS request to these PCFs to authorize the QoS required for the model transfer separately for each involved UE. In this connection, the FLAF can also provide time(s) and optionally periodicity information when the model transfer to/from the UE will occur to the PCF. That is, in S330, a policy authorization request with media and time information is sent to the PCF.

That is, it is to be noted that NEF, FLAF, TSCTSF and also PCF may be examples of a network element or function referred to also as a first communication network control element or first communication network control function.

In S335, the PCF determines PCC rule(s) that include QoS applicability time(s) (e.g. start time(s), duration(s), and optionally repetition period(s)) that are to be transferred to the NG-RAN. That is, the PCF determines PCC rules with time dependent QoS. According to examples of embodiments, the PCF may prepare and provide several QoS parameter sets with applicability times associated to them. The PCF may also include information about a data volume to be expected during applicable QoS time periods.

It is to be noted that PCF may be an example of a network element or function referred to also as a second communication network control element or second communication network control function.

In S340, the PCF sends the PCC rule(s) determined in S335 with the information determined in S335 to the SMF.

In S345, the SMF determines on the basis of the PCC rule(s) being sent in S340 QoS profiles with applicability time(s) and optional data volume(s). The QoS profiles are provided to the NG RAN. Optionally, for example in case the handling of RAN resources is not sufficient to satisfy the requirements in the request, the PCF can also provide respective time-dependent QoS rules to the UE and time-dependent PDRs to the UPF.

It is to be noted that SMF may be an example of a network element or function referred to also as a third communication network control element or third communication network control function.

In S350, the NG RAN (e.g. a gNB) executes the time dependent QoS as per the specified QoS profiles in the specified time intervals. That is, resources are allocated according to the QoS profile and the time map.

It is to be noted that the NG RAN may be an example of a network element or function referred to also as a fourth communication network control element or fourth communication network control function.

In S355 to S370, respective responses (successful or erroneous) to the requests of S340, S330, S320 and S310 are sent back to the respective NF service consumers, i.e. a PCC rule provisioning response in S355, and a respective response to a request for session with QoS in S360, S365, and S370.

In S380 the data communication requested by the AF can be conducted with the QoS settings to the suitable, i.e. specified times.

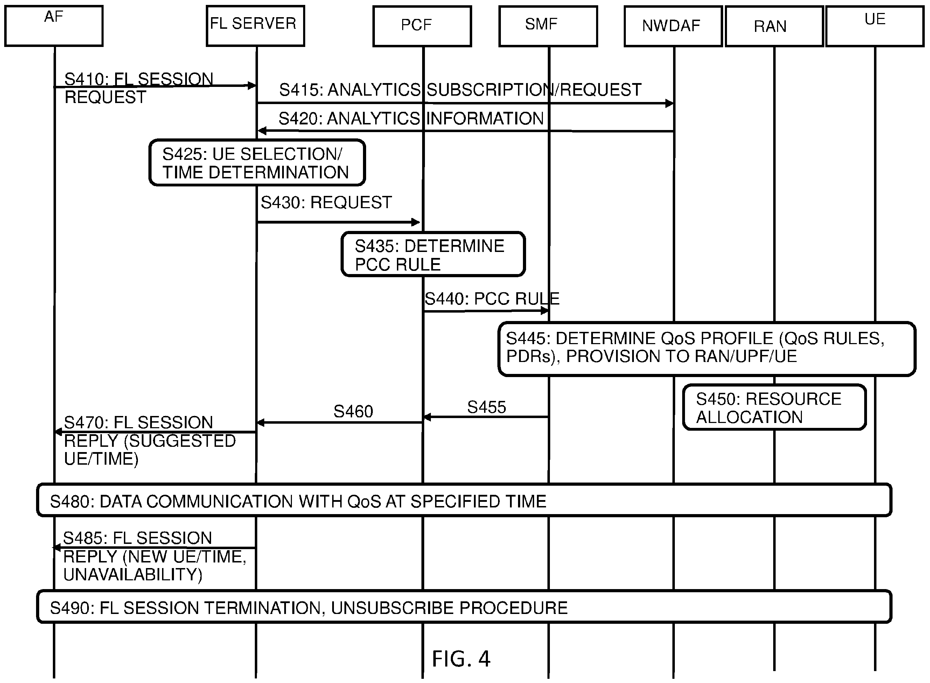

Referring to Fig. 4, a signaling diagram is shown illustrating a further example of a QoS setting procedure according to examples of embodiments. Specifically, Fig. 3 shows a UE staggering callflow with notification to the AF.

The example described in connection with Fig. 4 is related to a case where a network element provides a suggestion for UEs to be involved in the communication connection of the AF. For example, a federated learning server, which represents another example of a network element or function referred to also as a first communication network control element or first communication network control function provides suggested UEs to the AF. The federated learning server also provides suggested times for the federated learning cycles with those UEs back to the AF. The federated learning server selects PCFs handling involved UEs, and requests those PCFs to authorize the QoS required for the model transfer separately for each involved UE. Furthermore, the federated learning server provides time(s) and optionally periodicity when the model transfer to/from the UE will occur to the PCF.

For this, in S410, the AF tasks the federated learning network server to propose UEs for federated learning. It is to be noted that the federated learning network server may be integrated in an NEF, an NWDAF or be standalone network element or function. For example, the AF sends a FL session request to the federated learning network server, which comprises one or more of the following indications: an UE group, a UE number required to perform federated learning cycle, possibly expected time for a UE to perform federated learning cycle, a desired location area, an overall response time per cycle, an expected UE response time per learning cycle, a time when to start federated learning cycle, an input model size and an output model size. It is to be noted that the above described indications are only examples and refer to a case where a AI/ML model transfer is planned; it is obvious that other parameters are considered in case of a different application example.

The federated learning network server selects UEs for the federated learning cycle from the group of UEs obtained in S410. For this purpose, for example, the federated learning network server conducts in S415 and S420 with an NWDAF an analytics process. In S415, the server inquires analytics about UE or a network serving the UE from NWDAF. For example, an observed service experience related network data analytics, a network performance analytics, an UE related analytics, an UE mobility analytics, a user data congestion analytics, and/or a dispersion analytics as defined in 3GPP TS 23.288 can be executed. Specifically, in S415, a Nnwdaf_AnalyticsSubscription subscribe or an Nnwdaf_AnayticsInfo request message including an analytics ID, possible UE ID or group ID is sent to the NWDAF. The NWDAF responds with a corresponding Nnwdaf_AnalyticsSubscription notify or an Nnwdaf_AnayticsInfo response message which includes corresponding analytics information.

In S425, the federated learning network server selects the UEs for the data communication. For example, the federated learning network server selects less UEs served by less loaded network components. The server preferably selects times with less load and may distribute times for different UEs in such a manner that UEs in proximity to each other perform the cycles at different times to avoid network congestion where those UEs are located.

In S430, a request for policy authorization with media and time information is sent to the PCF with regard to the selected UEs.

The following processing in the communication network with regard to the QoS setting and resource allocation in the PCF, the SMF and the NG RAN basically corresponds to the processing explained in connection with Fig. 3 in S335 to S365, so that a corresponding explanation thereof is omitted here.

Then, in S470 , the federated learning network server provides a list of suggested UEs to AF in connection with a FL session reply message which includes information regarding the suggested UEs and suggested times for the data communication with the UEs.

S480 describe user plane communication between an application server (not shown), e.g. AI ML application server on behalf of which the AF sends the QoS requirements to the 5G Core Network, for example to the FL server also called FL Assistance Function, or the PCF. In S480, the Application Server conducts a data communication with the selected UEs. That is, the Application Server sends to the suggested UEs a request to start federated learning cycle(s) and provides the input model. In response thereto, the Application Server receives from the UEs output model information for each learning cycle.

It is to be noted that according to some examples of embodiments, the federated learning server is configured to monitor whether the suggested UEs remain available (i.e. registered, active, reachable), or meet other selection criteria e.g. area of interest.

On the basis of this monitoring, e.g. when any of the suggested UEs becomes unavailable or does not meet anymore a selection criteria, the federated learning server notifies the AF accordingly in S485. This notification is provided, for example, by means of a further FL session reply message.

According to further examples of embodiments, in case of a monitoring result where a previously suggested UE is not available anymore, the federated learning server may also use the results in S425 to suggests one or more new UEs in S485.

In S490, the AF requests termination of the federated learning session from the federated learning server. In this case, the federated learning server terminates related events and analytics subscriptions at the network, e.g. in AMF, UDM, and/or NWDAF, by a corresponding unsubscribe procedure, for example.

By means of the above described measures it is possible to specify a QoS for specific times when a predetermined type of communication is to be conducted. For example, when referring to an example where 5Gs QoS is to be used for AI/ML federated learning (e.g. for model transfer between the UE and an AI/ML AF), 5GS resources can be reserved only at times when model transfer is required. It is not necessary that the AI/ML developers are aware of communication network requirements but can focus on the application needs. As indicated above, while the AI/ML model transfer is used as an example for explaining principles of examples and embodiments, it is to be noted that the principles are generally applicable to scenarios when an application requires brief, periodic use of a significant amount of network resources.

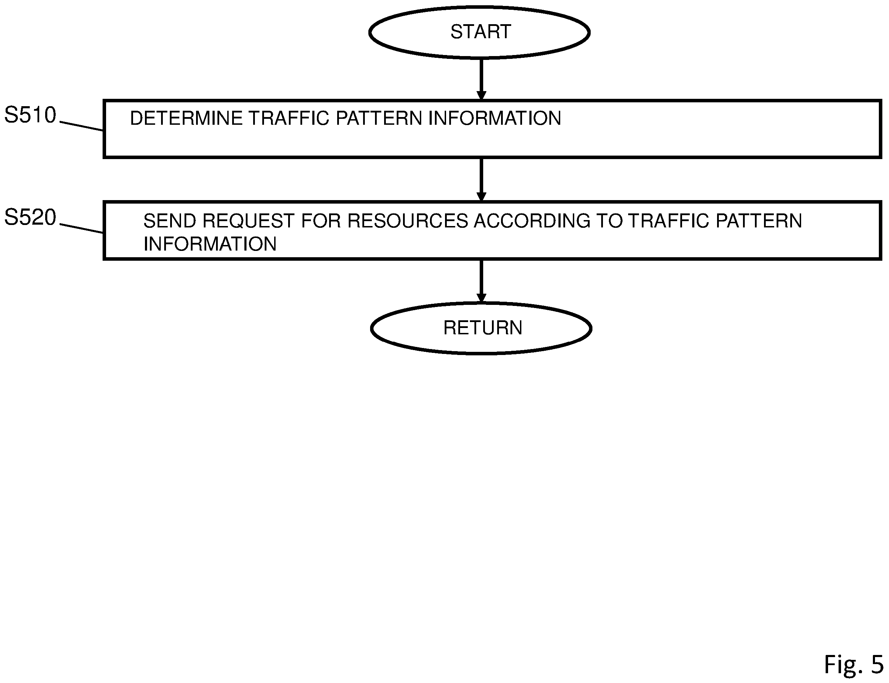

Fig. 5 shows a flow chart of a processing conducted in an application function requesting resources for a communication according to some examples of embodiments. That is, Fig. 5 shows a flowchart related to a processing conducted by an AF as also described in connection with Figs. 2 to 4.

In S510, the AF determine, for a data communication to be conducted with at least one communication element or communication function, such as one or more UEs, traffic pattern information. The traffic pattern information indicate a time setting or timing for the data communication, and QoS information to be provided for the data communication. In other words, it is determined that a specific type of data communication requiring, for example, a high amount of resources is intended to be conducted at a specific timing, such as in case of a AI/ML model transfer processing as described above.

In S520, the AF sends, to a communication network control element or communication network control function, a request for providing resources at a specified time according to the determined traffic pattern information for the intended data commnication.

For example, the request comprises communication related information and at least a first set of QoS related information to be considered during a time specified in the communication related information. The communication related information comprises, for example, one or more information about a data communication start time, a data communication stop time, a data communication periodicity, a data communication direction, and a data size indication. The QoS related information comprises one or more information about a requested bandwidth, an error rate, delay information, and a guaranteed bit rate.

According to examples of embodiments, the request includes, besides the first set of QoS related information, also a second set of QoS related information to be considered during a time being different to the time specified in the communication related information. In other words, it is indicated which QoS is desired during the specified timing, and which QoS is desired outside the specified timing.

According to examples of embodiments, the AF can indicate to communicate with one UE or with a plurality of UEs. That is, the request may comprise communication related information and QoS related information for a data communication with one UE, or the request may comprise a plurality of communication related information sets and QoS related information sets for a plurality of data communications with a plurality of UEs.

According to further examples of embodiments, the AF receives an indication of one or more communication elements or communication functions with which the data communication is to be conducted. This is described, for example, in connection with Fig. 4, where a corresponding indication is provided to the AF by an external server, for example the federated learning server.

Moreover, according to examples of embodiments, the AF can direct the request in S520 to different recipients, which may depend also on type of AF (trusted, untrusted, able to provide QoS information or not). For example, as the communication network control element or communication network control function to which the request for providing resources at a specified time is sent, one of a network exposure function, a policy control function, an assistance network function associated to the data communication (such as he FLAF), and a time sensitive communication and time synchronization function (TSCTSF) can be selected. A content of the request is adapted to the selected communication network control element or communication network control function.

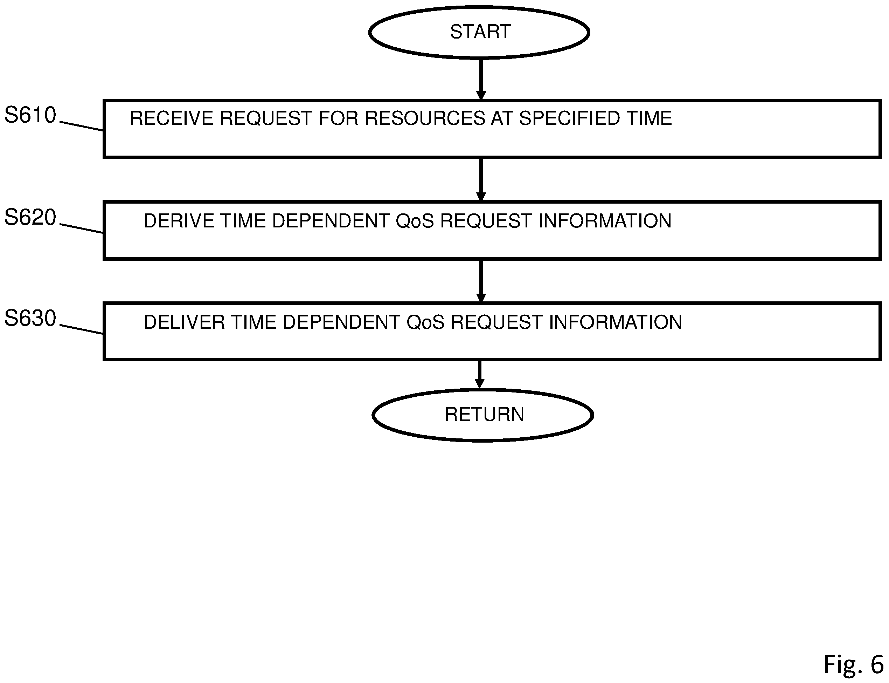

Fig. 6 shows a flow chart of a processing conducted in a network function involved in a QoS setting procedure according to some examples of embodiments. That is, Fig. 6 shows a flowchart related to a processing conducted by an network function which is also described in connection with Figs. 2 to 4 as one of the NEF, the assistance function (e.g. FLAF), the TSCTSF, and the PCF.

In S610, the network element or network function receives from an AF a request for providing resources at a specified time according to traffic pattern information for a data communication to be conducted with at least one UE. As indicated above, the traffic pattern information indicate a time setting for the data communication and QoS information to be provided for the data communication.

For example, the request comprises communication related information and at least a first set of QoS related information to be considered during a time specified in the communication related information. The communication related information comprises, for example, one or more information about a data communication start time, a data communication stop time, a data communication periodicity, a data communication direction, and a data size indication. The QoS related information comprises one or more information about a requested bandwidth, an error rate, delay information, and a guaranteed bit rate.

According to examples of embodiments, the request includes, besides the first set of QoS related information, also a second set of QoS related information to be considered during a time being different to the time specified in the communication related information. In other words, it is indicated which QoS is desired during the specified timing, and which QoS is desired outside the specified timing.

According to examples of embodiments, the AF can indicate to communicate with one UE or with a plurality of UEs. That is, the request may comprise communication related information and QoS related information for a data communication with one UE, or the request may comprise a plurality of communication related information sets and QoS related information sets for a plurality of data communications with a plurality of UEs.

In S620, from the request, time dependent QoS request information are derived. The time dependent QoS request information allows a policy control function of the communication network to determine policy PCC rules for the data communication. The time dependent QoS request information can be derived either directly from the request, i.e. the request contains already the time dependent QoS request information. This is the case, for example, when the network element or network function is the PCF.

Otherwise, the time dependent QoS request information are derived by converting information included in the communication related information and the QoS related information of the request into time dependent QoS request information. This is done, for example, when the AF is not able to provide the time dependent QoS request information directly but includes in the request, for example, traffic pattern information. This is converted by the network element or network function into the time dependent QoS request information, wherein the network element or network function is then e.g. the assistance function like the FLAF.

In S630, the derived time dependent QoS request information is delivered to a PCF of the communication network.

According to further examples of embodiments, the network element or network function is configured to execute an authorization procedure for the request being received. This is possible, for example, when the network element or network function is the TSCTSF, or the NEF, as also described in connection with Fig. 3, for example.

Furthermore, according to further examples of embodiments, the network element or network function is configured to select at least one PCF handling a UE involved in the data communication. The time dependent QoS request information is then delivered to the selected PCF.

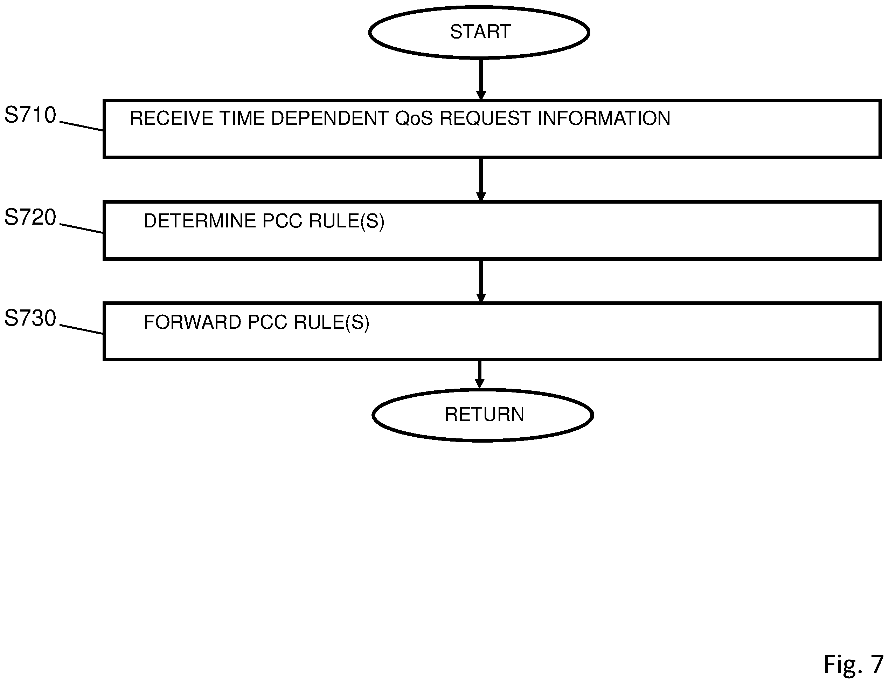

Fig. 7 shows a flow chart of a processing conducted in a policy control function involved in a QoS setting procedure according to some examples of embodiments. That is, Fig. 7 shows a flowchart related to a processing conducted by a PCF which is also described in connection with Figs. 2 to 4.

In S710, the PCF receives time dependent QoS request information indicating resources for a data communication with at least one UE to be conducted at a specified time.

The time dependent QoS request information can be received from different sources, for example, from a communication network control element or communication network control function including one of a NEF, an assistance network function associated to the data communication (e.g. the FLAF), a TSCTSF, or from an AF requesting the data communication.

In S720, the PCF determines at least one PCC rule for a communication session on the basis of the time dependent QoS request information. The at least one PCC control rule comprises QoS applicability time information.

According to examples of embodiments, the at least one PCC rule comprises information including at least one of a data communication start time, a data communication stop time, a data repetition period for a QoS to be applied, a data communication duration, an indication of a data volume to be expected during a time period when the QoS is applied, an error rate, delay information, and a guaranteed bit rate.

In S730, the at least one PCC rule is forwarded to a third communication network control element or third communication network control function configured to manage the communication session, e.g. to the SMF.

According to examples of embodiments, the PCF determines a plurality of PCC rules for a plurality of communication session on the basis of the time dependent QoS request information, wherein each of the plurality of PCC rules comprises dedicated QoS applicability time information.

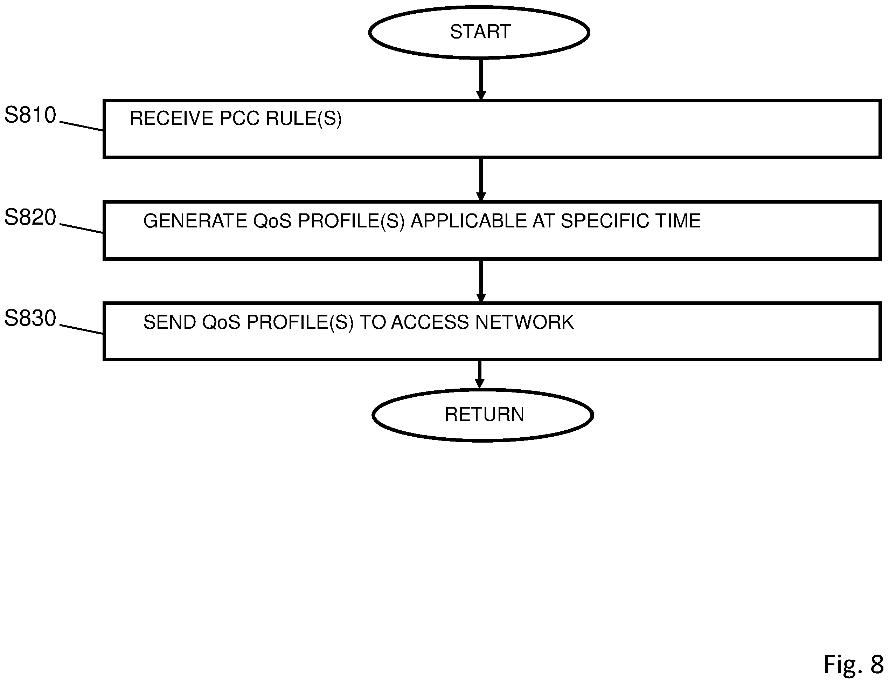

Fig. 8 shows a flow chart of a processing conducted in a session management function involved in a QoS setting procedure according to some examples of embodiments. That is, Fig. 8 shows a flowchart related to a processing conducted by a SMF which is also described in connection with Figs. 2 to 4.

In S810, the SMF receives at least one PCC rule for a communication session. The at least one PCC rule comprises QoS applicability time information.

In S820, the SMF generates at least one QoS profile for a communication session by mapping information contained in the received at least one PCC rule to the at least one QoS profile. The at least one QoS profile is applicable at a specific time indicated in the at least one PCC rule.

According to examples of embodiments, the at least one QoS profile comprises information including at least one of a data communication start time, a data communication stop time, a data repetition period for the QoS profile to be applied, a data communication duration, an indication of a data volume to be expected during a time period when the QoS profile is applied, an indication of a data volume to be expected during a time period when the QoS is applied, an error rate when the QoS profile is applied, delay information to be considered when the QoS profile is applied, and a guaranteed bit rate when the QoS profile is applied.

Furthermore, according to examples of embodiments, the SMF generates a first QoS profile for the communication session which is applicable at the specific time indicated in the at least one PCC rule, and a second QoS profile for the communication session which is applicable at a time being different to the specific time indicated in the at least one PCC rule. Resources or QoS requirements for the first QoS profile are different to resources or QoS requirements for the second QoS profile.

In S830, the SMF sends the at least one QoS profile to a fourth communication network control element or fourth communication network control function configured to operate as an access network controller for a communication element or communication function.

In addition to the QoS profile, traffic pattern information or a timing map for applying the at least one QoS profile can be provided to the fourth communication network control element or fourth communication network control function.

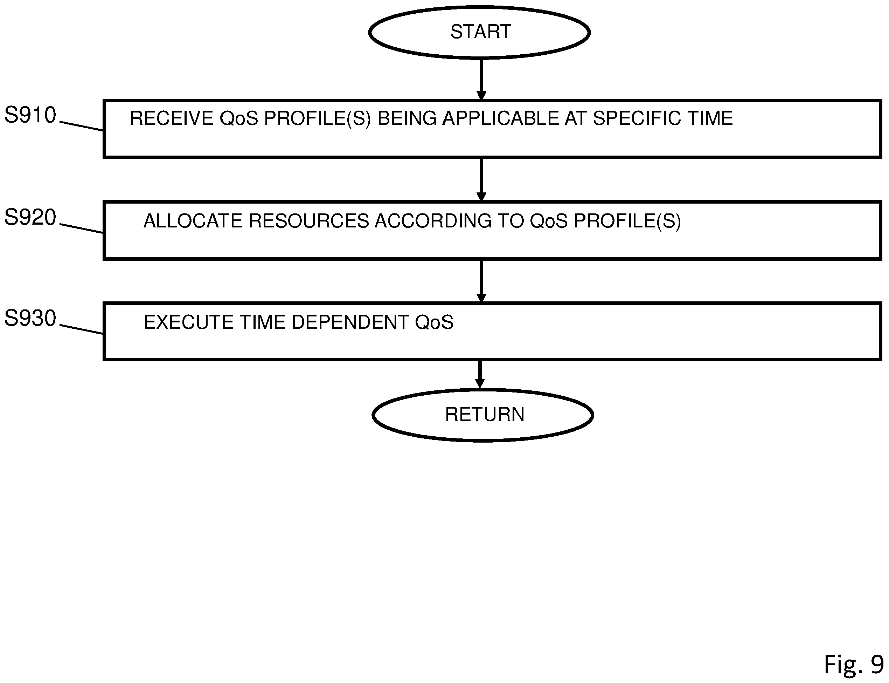

Fig. 9 shows a flow chart of a processing conducted in a radio access network element involved in a QoS setting procedure according to some examples of embodiments. That is, Fig. 9 shows a flowchart related to a processing conducted by a RAN element or function (e.g. a gNB) which is also described in connection with Figs. 2 to 4.

In S910, the RAN receives at least one QoS profile for a communication session, wherein the at least one QoS profile is applicable at a specific time.

According to examples of embodiments, the at least one QoS profile comprises information including at least one of a data communication start time, a data communication stop time, a data repetition period for the QoS profile to be applied, a data communication duration, an indication of a data volume to be expected during a time period when the QoS is applied, an error rate when the QoS profile is applied, delay information to be considered when the QoS profile is applied, and a guaranteed bit rate when the QoS profile is applied.

In S920, the RAN allocates resources for a communication session according to the received at least one QoS profile.

In S930, a time dependent QoS according to the received at least one QoS profile in the specific time is executed.

According to examples of embodiments, the RAN receives, in addition to the at least one QoS profile, traffic pattern information or a timing map for applying the at least one QoS profile. In case traffic pattern information is received, the RAN formulates a timing map for applying the at least one QoS profile on the basis of the traffic pattern information.

Moreover, according to examples of embodiments, the RAN receives a first QoS profile for the communication session which is applicable at the specific time, and a second QoS profile for the communication session which is applicable at a time being different to the specific time. Resources for the first QoS profile are different to resources for the second QoS profile

In this case, the RAN switches between an allocation of resources for a communication session according to the first QoS profile and an execution of a time dependent QoS according to the first QoS profile and an allocation of resources for a communication session according to the second QoS profile and an execution of a time dependent QoS according to the second QoS profile according to timing information for applying a corresponding QoS profile.

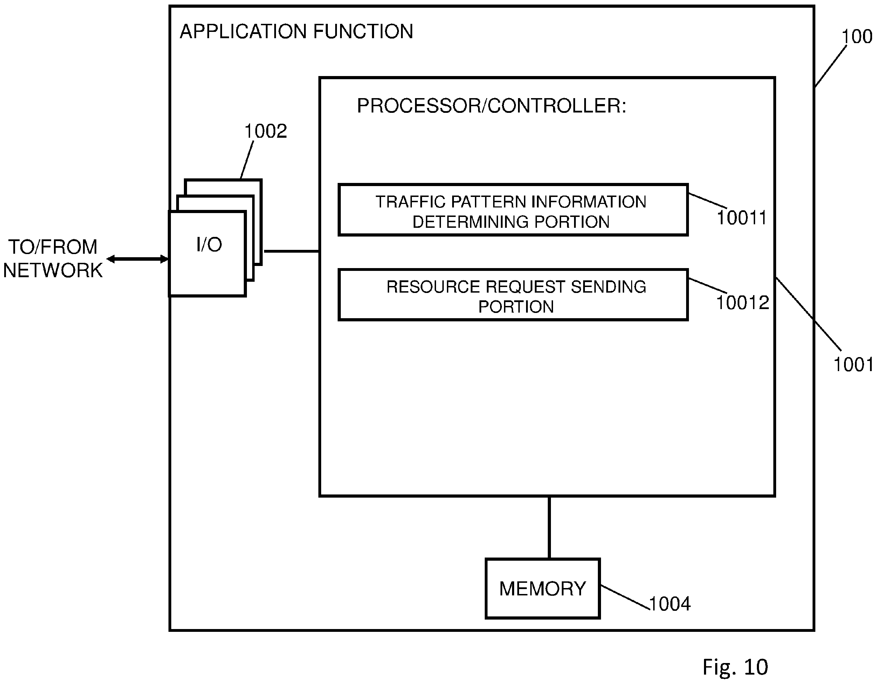

Fig. 10 shows a diagram of a network element or network function configured as an application function, e.g. AF 100 (corresponding to AF 10 shown in Fig. 1 and the AF explained in connection with Figs. 2 to 4, for example), which is configured to conduct processing according to examples of embodiments of the disclosure. It is to be noted that the network element or function, such as the AF 100, may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The AF 100 shown in Fig. 10 may include processing circuitry, a processing function, a control unit or a processor 1001, such as a CPU or the like, which is suitable for executing instructions given by programs or the like related to the control procedure. The processor 1001 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 1002 denotes input/output (I/O) units or functions (interfaces) connected to the processor or processing function 1001. The I/O units 1002 may be used for communicating with network functions such as the NEF, the PCF, as shown in Fig. 1, or to other network elements or network functions. The I/O unit 1002 may be a combined unit including communication equipment towards several entities, or may include a distributed structure with a plurality of different interfaces for different entities. Reference sign 1004 denotes a memory usable, for example, for storing data and programs to be executed by the processor or processing function 1001 and/or as a working storage of the processor or processing function 1001. It is to be noted that the memory 1004 may be implemented by using one or more memory portions of the same or different type of memory.

The processor or processing function 1001 is configured to execute processing related to the above-described QoS setting procedure. In particular, the processor or processing circuitry or function 1001 includes one or more of the following sub-portions. Sub-portion 10011 is a processing portion which is usable as a portion for determining a traffic pattern. The portion 10011 may be configured to perform processing according to S510 of Fig. 5. Furthermore, the processor or processing circuitry or function 1001 may include a sub-portion 10012 usable as a portion for sending a resource request. The portion 10012 may be configured to perform a processing according to S520 of Fig. 5.

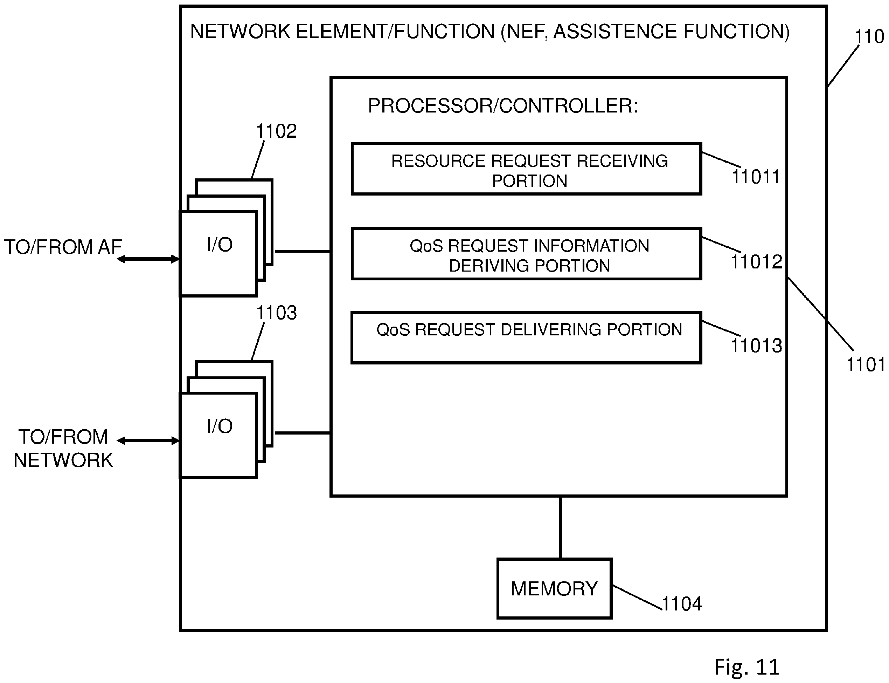

Fig. 11 shows a diagram of a network element or network function configured as a network element or network function 110, e.g. NEF, PCF, as shown in Fig. 1, or other network elements or network functions like an assistance function like the FLAF, or the TSCTLF (corresponding to NF shown in Fig. 2 and the NEF or FLAF or FL server explained in connection with Figs. 3 and 4, for example), which is configured to conduct processing according to examples of embodiments of the disclosure. It is to be noted that the network element or function 110 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The network element 110 shown in Fig. 11 may include processing circuitry, a processing function, a control unit or a processor 1101, such as a CPU or the like, which is suitable for executing instructions given by programs or the like related to the control procedure. The processor 1101 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1102 and 1103 denote input/output (I/O) units or functions (interfaces) connected to the processor or processing function 1101. The I/O units 1102 may be used for communicating with an application function. The I/O units 1103 may be used for communicating with other network elements or network functions, such as the PCF. The I/O units 1102 and 1103 may be combined units including communication equipment towards several entities, or may include a distributed structure with a plurality of different interfaces for different entities. Reference sign 1104 denotes a memory usable, for example, for storing data and programs to be executed by the processor or processing function 1101 and/or as a working storage of the processor or processing function 1101. It is to be noted that the memory 1104 may be implemented by using one or more memory portions of the same or different type of memory.

The processor or processing function 1101 is configured to execute processing related to the above-described QoS setting procedure. In particular, the processor or processing circuitry or function 1101 includes one or more of the following sub-portions. Sub-portion 11011 is a processing portion which is usable as a portion for receiving a resource request. The portion 11011 may be configured to perform processing according to S610 of Fig. 6. Furthermore, the processor or processing circuitry or function 1101 may include a sub-portion 11012 usable as a portion for deriving QoS request information. The portion 11012 may be configured to perform a processing according to S620 of Fig. 6. In addition, the processor or processing circuitry or function 1101 may include a sub-portion 11013 usable as a portion for delivering a QoS request. The portion 11013 may be configured to perform a processing according to S630 of Fig. 6.

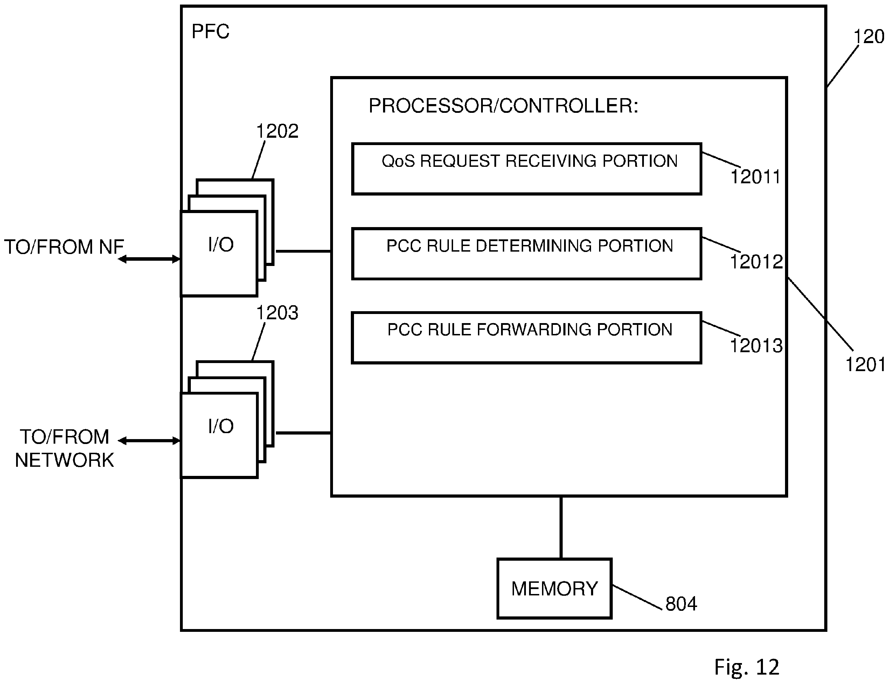

Fig. 12 shows a diagram of a network element or network function configured as a policy control element or function 120, e.g. the PCF 120 as shown in Fig. 1 (corresponding to the PCF explained in connection with Figs. 2 to 4, for example), which is configured to conduct processing according to examples of embodiments of the disclosure. It is to be noted that the PCF 120 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The PCF 120 shown in Fig. 12 may include processing circuitry, a processing function, a control unit or a processor 1201, such as a CPU or the like, which is suitable for executing instructions given by programs or the like related to the control procedure. The processor 1201 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1202 and 1203 denote input/output (I/O) units or functions (interfaces) connected to the processor or processing function 1201. The I/O units 1202 may be used for communicating with a network function like that shown in Fig. 11, or with the AF shown in Fig. 10. The I/O units 1203 may be used for communicating with other network elements or network functions, such as the SMF. The I/O units 1202 and 1203 may be combined units including communication equipment towards several entities, or may include a distributed structure with a plurality of different interfaces for different entities. Reference sign 1204 denotes a memory usable, for example, for storing data and programs to be executed by the processor or processing function 1201 and/or as a working storage of the processor or processing function 1201. It is to be noted that the memory 1204 may be implemented by using one or more memory portions of the same or different type of memory.

The processor or processing function 1201 is configured to execute processing related to the above-described QoS setting procedure. In particular, the processor or processing circuitry or function 1201 includes one or more of the following sub-portions. Sub-portion 12011 is a processing portion which is usable as a portion for receiving a QoS request. The portion 12011 may be configured to perform processing according to S710 of Fig. 7. Furthermore, the processor or processing circuitry or function 1201 may include a sub-portion 12012 usable as a portion for determining PCC rule(s). The portion 12012 may be configured to perform a processing according to S720 of Fig. 7. In addition, the processor or processing circuitry or function 1201 may include a sub-portion 12013 usable as a portion for forwarding the PCC rule(s). The portion 12013 may be configured to perform a processing according to S730 of Fig. 7.

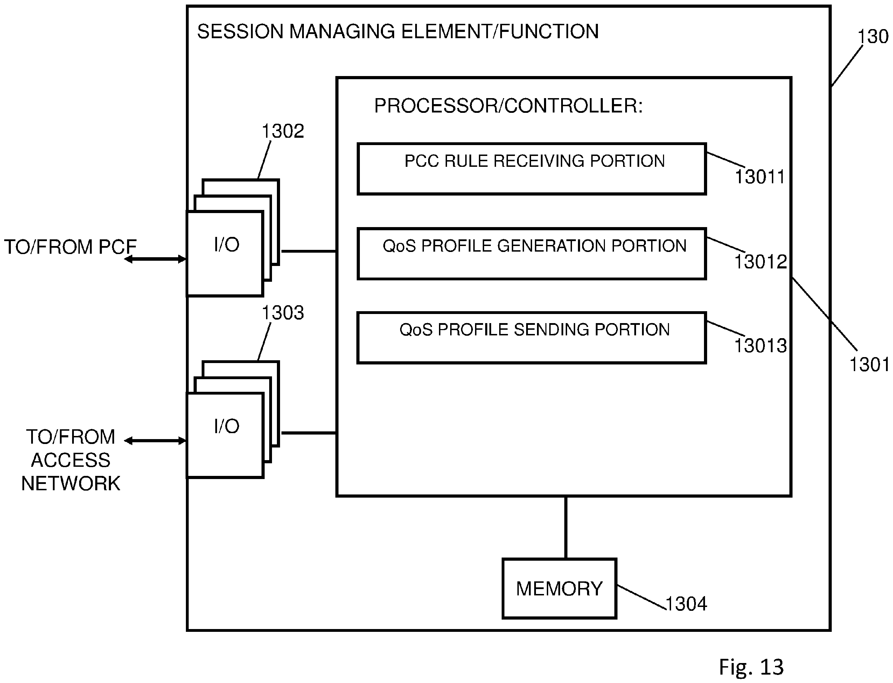

Fig. 13 shows a diagram of a network element or network function configured as a session management element or function 130, e.g. the SMF 130 as shown in Fig. 1 (corresponding to the SMF explained in connection with Figs. 2 to 4, for example), which is configured to conduct processing according to examples of embodiments of the disclosure. It is to be noted that the SMF 130 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The SMF 130 shown in Fig. 13 may include processing circuitry, a processing function, a control unit or a processor 1301, such as a CPU or the like, which is suitable for executing instructions given by programs or the like related to the control procedure. The processor 1301 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1302 and 1303 denote input/output (I/O) units or functions (interfaces) connected to the processor or processing function 1301. The I/O units 1302 may be used for communicating with a PCF. The I/O units 1303 may be used for communicating with other network elements or network functions, such as the RAN. The I/O units 1302 and 1303 may be combined units including communication equipment towards several entities, or may include a distributed structure with a plurality of different interfaces for different entities. Reference sign 1304 denotes a memory usable, for example, for storing data and programs to be executed by the processor or processing function 1301 and/or as a working storage of the processor or processing function 1301. It is to be noted that the memory 1304 may be implemented by using one or more memory portions of the same or different type of memory.

The processor or processing function 1301 is configured to execute processing related to the above-described QoS setting procedure. In particular, the processor or processing circuitry or function 1301 includes one or more of the following sub-portions. Sub-portion 13011 is a processing portion which is usable as a portion for receiving PCC rule(s). The portion 13011 may be configured to perform processing according to S810 of Fig. 8. Furthermore, the processor or processing circuitry or function 1301 may include a sub-portion 13012 usable as a portion for generating QoS profile(s). The portion 13012 may be configured to perform a processing according to S820 of Fig. 8. In addition, the processor or processing circuitry or function 1301 may include a sub-portion 13013 usable as a portion for sending the QoS profile(s). The portion 13013 may be configured to perform a processing according to S830 of Fig. 8.

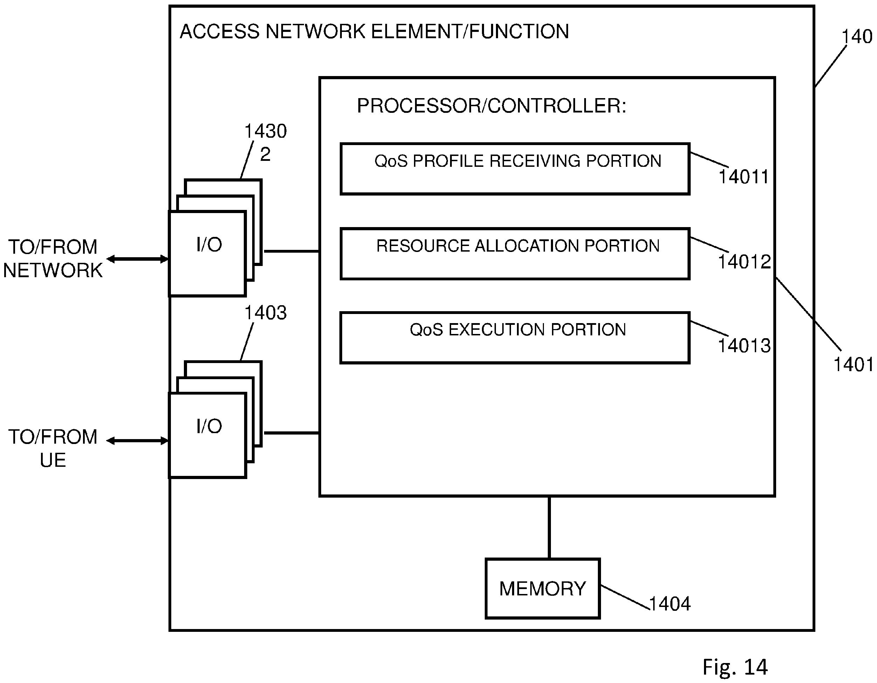

Fig. 14 shows a diagram of a network element or network function configured as a radio access network element or function 140, e.g. the RAN as shown in Fig. 1 (corresponding to the RAN explained in connection with Figs. 2 to 4, for example), which is configured to conduct processing according to examples of embodiments of the disclosure. It is to be noted that the RAN 140 may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The RAN 140 shown in Fig. 14 may include processing circuitry, a processing function, a control unit or a processor 1401, such as a CPU or the like, which is suitable for executing instructions given by programs or the like related to the control procedure. The processor 1401 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1402 and 1403 denote input/output (I/O) units or functions (interfaces) connected to the processor or processing function 1401. The I/O units 1402 may be used for communicating with a network element or network function, such as the SMF. The I/O units 1403 may be used for communicating with a UE. The I/O units 1402 and 1403 may be combined units including communication equipment towards several entities, or may include a distributed structure with a plurality of different interfaces for different entities. Reference sign 1404 denotes a memory usable, for example, for storing data and programs to be executed by the processor or processing function 1401 and/or as a working storage of the processor or processing function 1401. It is to be noted that the memory 1404 may be implemented by using one or more memory portions of the same or different type of memory.

The processor or processing function 1401 is configured to execute processing related to the above-described QoS setting procedure. In particular, the processor or processing circuitry or function 1401 includes one or more of the following sub-portions. Sub-portion 14011 is a processing portion which is usable as a portion for receiving QoS profile(s). The portion 14011 may be configured to perform processing according to S910 of Fig. 9. Furthermore, the processor or processing circuitry or function 1401 may include a sub-portion 14012 usable as a portion for allocating resources. The portion 14012 may be configured to perform a processing according to S920 of Fig. 9. In addition, the processor or processing circuitry or function 1401 may include a sub-portion 14013 usable as a portion for executing the QoS. The portion 14013 may be configured to perform a processing according to S930 of Fig. 9.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operation environment may be used in connection with examples of embodiments of the disclosure based on the principles defined.

According to a further example of embodiments, there is provided, for example, an apparatus for use by an application function network element or application function network function of a communication network, the apparatus comprising means configured to determine, for a data communication to be conducted with at least one communication element or communication function, traffic pattern information indicating a time setting for the data communication and quality of service, QoS, information to be provided for the data communication, and means configured to send, to a communication network control element or communication network control function, a request for providing resources at a specified time according to the determined traffic pattern information.

Furthermore, according to some other examples of embodiments, the above defined apparatus may further comprise means for conducting at least one of the processing defined in the above described methods, for example a method according to that described in connection with Fig. 5.

According to a further example of embodiments, there is provided, for example, an apparatus for use by a first communication network control element or first communication network control function of a communication network, the apparatus comprising means configured to receive a request for providing resources at a specified time according to traffic pattern information for a data communication to be conducted with at least one communication element or communication function, the traffic pattern information indicating a time setting for the data communication and QoS information to be provided for the data communication, means configured to derive, from the request, time dependent QoS request information allowing a policy control function of the communication network to determine policy and charging rules for the data communication, and means configured to deliver the derived time dependent QoS request information to the policy control function of the communication network.

Furthermore, according to some other examples of embodiments, the above defined apparatus may further comprise means for conducting at least one of the processing defined in the above described methods, for example a method according to that described in connection with Fig. 6.

According to a further example of embodiments, there is provided, for example, an apparatus for use by a second communication network control element or second communication network control function acting as a policy control function of a communication network, the apparatus comprising means configured to receive time dependent QoS request information indicating resources for a data communication with at least one communication element or communication function to be conducted at a specified time, means configured to determine at least one policy and charging control rule for a communication session on the basis of the time dependent QoS request information, the at least one policy and charging control rule comprising QoS applicability time information, and means configured to forward the at least one policy and charging control rule to a third communication network control element or third communication network control function configured to manage the communication session.

Furthermore, according to some other examples of embodiments, the above defined apparatus may further comprise means for conducting at least one of the processing defined in the above described methods, for example a method according to that described in connection with Fig. 7.

According to a further example of embodiments, there is provided, for example, an apparatus for use by a third communication network control element or third communication network control function configured to manage a communication session in a communication network, the apparatus comprising means configured to receive at least one policy and charging control rule for a communication session, the at least one policy and charging control rule comprising QoS applicability time information, means configured to generate at least one QoS profile for a communication session by mapping information contained in the received at least one policy and charging control rule to the at least one QoS profile, wherein the at least one QoS profile is applicable at a specific time indicated in the at least one policy and charging control rule, and means configured to send the at least one QoS profile to a fourth communication network control element or fourth communication network control function configured to operate as an access network controller for a communication element or communication function.

Furthermore, according to some other examples of embodiments, the above defined apparatus may further comprise means for conducting at least one of the processing defined in the above described methods, for example a method according to that described in connection with Fig. 8.

According to a further example of embodiments, there is provided, for example, an apparatus for use by a fourth communication network control element or fourth communication network control function configured to operate as an access network controller for a communication element or communication function in a communication network, the apparatus comprising means configured to receive at least one QoS profile for a communication session, wherein the at least one QoS profile is applicable at a specific time, means configured to allocate resources for a communication session according to the received at least one QoS profile, and means configured to execute a time dependent QoS according to the received at least one QoS profile in the specific time.

Furthermore, according to some other examples of embodiments, the above defined apparatus may further comprise means for conducting at least one of the processing defined in the above described methods, for example a method according to that described in connection with Fig. 9.

According to a further example of embodiments, there is provided, for example, a non-transitory computer readable medium comprising program instructions for causing an apparatus to perform, when used in an application function network element or application function network function of a communication network, a processing comprising determining, for a data communication to be conducted with at least one communication element or communication function, traffic pattern information indicating a time setting for the data communication and quality of service, QoS, information to be provided for the data communication, and sending, to a communication network control element or communication network control function, a request for providing resources at a specified time according to the determined traffic pattern information.

According to a further example of embodiments, there is provided, for example, a non-transitory computer readable medium comprising program instructions for causing an apparatus to perform, when used in a first communication network control element or first communication network control function of a communication network, a processing comprising receiving a request for providing resources at a specified time according to traffic pattern information for a data communication to be conducted with at least one communication element or communication function, the traffic pattern information indicating a time setting for the data communication and QoS information to be provided for the data communication, deriving, from the request, time dependent QoS request information allowing a policy control function of the communication network to determine policy and charging rules for the data communication, and delivering the derived time dependent QoS request information to the policy control function of the communication network.

According to a further example of embodiments, there is provided, for example, a non-transitory computer readable medium comprising program instructions for causing an apparatus to perform, when used in a second communication network control element or second communication network control function acting as a policy control function of a communication network, a processing comprising receiving time dependent QoS request information indicating resources for a data communication with at least one communication element or communication function to be conducted at a specified time, determining at least one policy and charging control rule for a communication session on the basis of the time dependent QoS request information, the at least one policy and charging control rule comprising QoS applicability time information, and forwarding the at least one policy and charging control rule to a third communication network control element or third communication network control function configured to manage the communication session.

According to a further example of embodiments, there is provided, for example, a non-transitory computer readable medium comprising program instructions for causing an apparatus to perform, when used in a third communication network control element or third communication network control function configured to manage a communication session in a communication network, a processing comprising receiving at least one policy and charging control rule for a communication session, the at least one policy and charging control rule comprising QoS applicability time information, generating at least one QoS profile for a communication session by mapping information contained in the received at least one policy and charging control rule to the at least one QoS profile, wherein the at least one QoS profile is applicable at a specific time indicated in the at least one policy and charging control rule, and sending the at least one QoS profile to a fourth communication network control element or fourth communication network control function configured to operate as an access network controller for a communication element or communication function.

According to a further example of embodiments, there is provided, for example, a non-transitory computer readable medium comprising program instructions for causing an apparatus to perform, when used in a fourth communication network control element or fourth communication network control function configured to operate as an access network controller for a communication element or communication function in a communication network, a processing comprising receiving at least one QoS profile for a communication session, wherein the at least one QoS profile is applicable at a specific time, allocating resources for a communication session according to the received at least one QoS profile, and executing a time dependent QoS according to the received at least one QoS profile in the specific time.

Further examples are described in the following:
Example 1. An apparatus for use by an application function network element or application function network function of a communication network, the apparatus comprising
   at least one processing circuitry, and
   at least one memory for storing instructions to be executed by the processing circuitry,
   wherein the at least one memory and the instructions are configured to, with the at least one processing circuitry, cause the apparatus at least:
      to determine, for a data communication to be conducted with at least one communication element or communication function, traffic pattern information indicating a time setting for the data communication and quality of service, QoS, information to be provided for the data communication, and
      to send, to a communication network control element or communication network control function, a request for providing resources at a specified time according to the determined traffic pattern information.
Example 2. The apparatus according to Example 1, wherein the request comprises communication related information and at least a first set of QoS related information to be considered during a time specified in the communication related information, wherein
   the communication related information comprises at least one of
      a data communication start time, a data communication stop time, a data communication periodicity, a data communication direction, a data size indication,
   and the QoS related information comprises at least one of
      requested bandwidth, an error rate, delay information, a guaranteed bit rate.
Example 3. The apparatus according to Example 2, wherein the request further comprises a second set of QoS related information to be considered during a time being different to the time specified in the communication related information.
Example 4. The apparatus according to Example 2 or 3, wherein the request comprises communication related information and QoS related information for a data communication with one communication element or communication function, or the request comprises a plurality of communication related information sets and QoS related information sets for a plurality of data communications with a plurality of communication elements or communication functions.
Example 5. The apparatus according to any of Examples 1 to 4, wherein the at least one memory and the instructions are configured to, with the at least one processing circuitry, cause the apparatus at least:
   to receive an indication of one or more communication elements or communication functions with which the data communication is to be conducted.
Example 6. The apparatus according to any of Examples 1 to 5, wherein the at least one memory and the instructions are configured to, with the at least one processing circuitry, cause the apparatus at least:
   to select, as the communication network control element or communication network control function to which the request for providing resources at a specified time is sent, one of a network exposure function, a policy control function, an assistance network function associated to the data communication, and a time sensitive communication and time synchronization function, wherein a content of the request is adapted to the selected communication network control element or communication network control function.
Example 7. An apparatus for use by a first communication network control element or first communication network control function of a communication network, the apparatus comprising
   at least one processing circuitry, and
   at least one memory for storing instructions to be executed by the processing circuitry,
   wherein the at least one memory and the instructions are configured to, with the at least one processing circuitry, cause the apparatus at least:
      to receive a request for providing resources at a specified time according to traffic pattern information for a data communication to be conducted with at least one communication element or communication function, the traffic pattern information indicating a time setting for the data communication and QoS information to be provided for the data communication,
      to derive, from the request, time dependent QoS request information allowing a policy control function of the communication network to determine policy and charging rules for the data communication, and
      to deliver the derived time dependent QoS request information to the policy control function of the communication network.
Example 8. The apparatus according to Example 7, wherein the request comprises communication related information and at least a first set of QoS related information to be considered during a time specified in the communication related information, wherein
   the communication related information comprises at least one of
      a data communication start time, a data communication stop time, a data communication periodicity, a data communication direction, a data size indication,
   and the QoS related information comprises at least one of
      requested bandwidth, an error rate, delay information, a guaranteed bit rate.
Example 9. The apparatus according to Example 8, wherein the request further comprises a second set of QoS related information to be considered during a time being different to the time specified in the communication related information.
Example 10. The apparatus according to Example 8 or 9, wherein the request comprises communication related information and QoS related information for a data communication with one communication element or communication function, or the request comprises a plurality of communication related information sets and QoS related information sets for a plurality of data communications with a plurality of communication elements or communication functions.
Example 11. The apparatus according to any of Examples 8 to 10, wherein the at least one memory and the instructions are configured to, with the at least one processing circuitry, cause the apparatus at least:
   to derive the time dependent QoS request information by converting information included in the communication related information and the QoS related information of the request into time dependent QoS request information.
Example 12. The apparatus according to any of Examples 7 to 11, wherein the at least one memory and the instructions are configured to, with the at least one processing circuitry, cause the apparatus at least:
   to conduct an authorization procedure for the request being received.
Example 13. The apparatus according to any of Examples 7 to 12, wherein the at least one memory and the instructions are configured to, with the at least one processing circuitry, cause the apparatus at least:
   to select at least one policy control function handling a communication element or communication function involved in the data communication, and
   to deliver the derived time dependent QoS request information to the selected policy control function.
Example 14. The apparatus according to any of Examples 7 to 13, wherein the communication network control element or communication network control function is one of a network exposure function, an assistance network function associated to the data communication, and a time sensitive communication and time synchronization function.
Example 15. An apparatus for use by a second communication network control element or second communication network control function acting as a policy control function of a communication network, the apparatus comprising
   at least one processing circuitry, and
   at least one memory for storing instructions to be executed by the processing circuitry,
   wherein the at least one memory and the instructions are configured to, with the at least one processing circuitry, cause the apparatus at least:
      to receive time dependent QoS request information indicating resources for a data communication with at least one communication element or communication function to be conducted at a specified time,
      to determine at least one policy and charging control rule for a communication session on the basis of the time dependent QoS request information, the at least one policy and charging control rule comprising QoS applicability time information, and
      to forward the at least one policy and charging control rule to a third communication network control element or third communication network control function configured to manage the communication session.
Example 16. The apparatus according to Example 15, wherein the at least one policy and charging control rule request comprises information including at least one of
   a data communication start time, a data communication stop time, a data repetition period for a QoS to be applied, a data communication duration, an indication of a data volume to be expected during a time period when the QoS is applied, an error rate, delay information, a guaranteed bit rate.
Example 17. The apparatus according to Example 15 or 16, wherein the at least one memory and the instructions are configured to, with the at least one processing circuitry, cause the apparatus at least:
   to determine a plurality of policy and charging control rules for a plurality of communication session on the basis of the time dependent QoS request information, wherein each of the plurality of policy and charging control rule comprises dedicated QoS applicability time information.
Example 18. The apparatus according to any of Examples 15 to 17, wherein the time dependent QoS request information is received from a communication network control element or communication network control function including one of a network exposure function, an assistance network function associated to the data communication, a time sensitive communication and time synchronization function, or from an application function network element or application function network function requesting the data communication.
Example 19. An apparatus for use by a third communication network control element or third communication network control function configured to manage a communication session in a communication network, the apparatus comprising
   at least one processing circuitry, and
   at least one memory for storing instructions to be executed by the processing circuitry,
   wherein the at least one memory and the instructions are configured to, with the at least one processing circuitry, cause the apparatus at least:
      to receive at least one policy and charging control rule for a communication session, the at least one policy and charging control rule comprising QoS applicability time information,
      to generate at least one QoS profile for a communication session by mapping information contained in the received at least one policy and charging control rule to the at least one QoS profile, wherein the at least one QoS profile is applicable at a specific time indicated in the at least one policy and charging control rule, and
      to send the at least one QoS profile to a fourth communication network control element or fourth communication network control function configured to operate as an access network controller for a communication element or communication function.
Example 20. The apparatus according to Example 19, wherein the at least one QoS profile comprises information including at least one of
   a data communication start time, a data communication stop time, a data repetition period for the QoS profile to be applied, a data communication duration, an indication of a data volume to be expected during a time period when the QoS profile is applied, an indication of a data volume to be expected during a time period when the QoS is applied, an error rate when the QoS profile is applied, delay information to be considered when the QoS profile is applied, and a guaranteed bit rate when the QoS profile is applied.
Example 21. The apparatus according to Example 19 or 20, wherein the at least one memory and the instructions are configured to, with the at least one processing circuitry, cause the apparatus at least:
   to provide, in addition to the QoS profile, traffic pattern information or a timing map for applying the at least one QoS profile.
Example 22. The apparatus according to any of Examples 19 to 21, wherein the at least one memory and the instructions are configured to, with the at least one processing circuitry, cause the apparatus at least:
   to generate a first QoS profile for the communication session which is applicable at the specific time indicated in the at least one policy and charging control rule, and a second QoS profile for the communication session which is applicable at a time being different to the specific time indicated in the at least one policy and charging control rule, wherein resources for the first QoS profile are different to resources for the second QoS profile.
Example 23. An apparatus for use by a fourth communication network control element or fourth communication network control function configured to operate as an access network controller for a communication element or communication function in a communication network, the apparatus comprising
   at least one processing circuitry, and
   at least one memory for storing instructions to be executed by the processing circuitry,
   wherein the at least one memory and the instructions are configured to, with the at least one processing circuitry, cause the apparatus at least:
      to receive at least one QoS profile for a communication session, wherein the at least one QoS profile is applicable at a specific time,
      to allocate resources for a communication session according to the received at least one QoS profile, and
      to execute a time dependent QoS according to the received at least one QoS profile in the specific time.
Example 24. The apparatus according to Example 23, wherein the at least one QoS profile comprises information including at least one of
   a data communication start time, a data communication stop time, a data repetition period for the QoS profile to be applied, a data communication duration, an indication of a data volume to be expected during a time period when the QoS is applied, an error rate when the QoS profile is applied, delay information to be considered when the QoS profile is applied, and a guaranteed bit rate when the QoS profile is applied.
Example 25. The apparatus according to Example 23 or 24, wherein the at least one memory and the instructions are configured to, with the at least one processing circuitry, cause the apparatus at least:
   to receive, in addition to the at least one QoS profile, traffic pattern information or a timing map for applying the at least one QoS profile, and
   in case traffic pattern information is received, to formulate a timing map for applying the at least one QoS profile on the basis of the traffic pattern information.
Example 26. The apparatus according to any of Examples 23 to 25, wherein the at least one memory and the instructions are configured to, with the at least one processing circuitry, cause the apparatus at least:
   to receive a first QoS profile for the communication session which is applicable at the specific time indicated in the at least one policy and charging control rule, and a second QoS profile for the communication session which is applicable at a time being different to the specific time indicated in the at least one policy and charging control rule, wherein resources for the first QoS profile are different to resources for the second QoS profile, and
   to switch between an allocation of resources for a communication session according to the first QoS profile and an execution of a time dependent QoS according to the first QoS profile and an allocation of resources for a communication session according to the second QoS profile and an execution of a time dependent QoS according to the second QoS profile according to timing information for applying a corresponding QoS profile.
Example 27. A method for use in an application function network element or application function network function of a communication network, the method comprising
   determining, for a data communication to be conducted with at least one communication element or communication function, traffic pattern information indicating a time setting for the data communication and quality of service, QoS, information to be provided for the data communication, and
   sending, to a communication network control element or communication network control function, a request for providing resources at a specified time according to the determined traffic pattern information.
Example 28. The method according to Example 27, wherein the request comprises communication related information and at least a first set of QoS related information to be considered during a time specified in the communication related information, wherein
   the communication related information comprises at least one of
      a data communication start time, a data communication stop time, a data communication periodicity, a data communication direction, a data size indication,
   and the QoS related information comprises at least one of
      requested bandwidth, an error rate, delay information, a guaranteed bit rate.
Example 29. The method according to Example 28, wherein the request further comprises a second set of QoS related information to be considered during a time being different to the time specified in the communication related information.
Example 30. The method according to Example 28 or 29, wherein the request comprises communication related information and QoS related information for a data communication with one communication element or communication function, or the request comprises a plurality of communication related information sets and QoS related information sets for a plurality of data communications with a plurality of communication elements or communication functions.
Example 31. The method according to any of Examples 27 to 30, further comprising
   receiving an indication of one or more communication elements or communication functions with which the data communication is to be conducted.
Example 32. The method according to any of Examples 27 to 31, further comprising
   selecting, as the communication network control element or communication network control function to which the request for providing resources at a specified time is sent, one of a network exposure function, a policy control function, an assistance network function associated to the data communication, and a time sensitive communication and time synchronization function, wherein a content of the request is adapted to the selected communication network control element or communication network control function.
Example 33. A method for use in a first communication network control element or first communication network control function of a communication network, the method comprising
   receiving a request for providing resources at a specified time according to traffic pattern information for a data communication to be conducted with at least one communication element or communication function, the traffic pattern information indicating a time setting for the data communication and QoS information to be provided for the data communication,
   deriving, from the request, time dependent QoS request information allowing a policy control function of the communication network to determine policy and charging rules for the data communication, and
   delivering the derived time dependent QoS request information to the policy control function of the communication network.
Example 34. The method according to Example 33, wherein the request comprises communication related information and at least a first set of QoS related information to be considered during a time specified in the communication related information, wherein
   the communication related information comprises at least one of
      a data communication start time, a data communication stop time, a data communication periodicity, a data communication direction, a data size indication,
   and the QoS related information comprises at least one of
      requested bandwidth, an error rate, delay information, a guaranteed bit rate.
Example 35. The method according to Example 34, wherein the request further comprises a second set of QoS related information to be considered during a time being different to the time specified in the communication related information.
Example 36. The method according to Example 34 or 35, wherein the request comprises communication related information and QoS related information for a data communication with one communication element or communication function, or the request comprises a plurality of communication related information sets and QoS related information sets for a plurality of data communications with a plurality of communication elements or communication functions.
Example 37. The method according to any of Examples 34 to 36, further comprising
   deriving the time dependent QoS request information by converting information included in the communication related information and the QoS related information of the request into time dependent QoS request information.
Example 38. The method according to any of Examples 33 to 37, further comprising
   conducting an authorization procedure for the request being received.
Example 39. The method according to any of Examples 33 to 38, further comprising
   selecting at least one policy control function handling a communication element or communication function involved in the data communication, and
   delivering the derived time dependent QoS request information to the selected policy control function.
Example 40. The method according to any of Examples 33 to 39, wherein the communication network control element or communication network control function is one of a network exposure function, an assistance network function associated to the data communication, and a time sensitive communication and time synchronization function.
Example 41. A method for use in a second communication network control element or second communication network control function acting as a policy control function of a communication network, the method comprising
   receiving time dependent QoS request information indicating resources for a data communication with at least one communication element or communication function to be conducted at a specified time,
   determining at least one policy and charging control rule for a communication session on the basis of the time dependent QoS request information, the at least one policy and charging control rule comprising QoS applicability time information, and
   forwarding the at least one policy and charging control rule to a third communication network control element or third communication network control function configured to manage the communication session.
Example 42. The method according to Example 41, wherein the at least one policy and charging control rule request comprises information including at least one of
   a data communication start time, a data communication stop time, a data repetition period for a QoS to be applied, a data communication duration, an indication of a data volume to be expected during a time period when the QoS is applied, an error rate, delay information, a guaranteed bit rate.
Example 43. The method according to Example 41 or 42, further comprising
   determining a plurality of policy and charging control rules for a plurality of communication session on the basis of the time dependent QoS request information, wherein each of the plurality of policy and charging control rule comprises dedicated QoS applicability time information.
Example 44. The method according to any of Examples 41 to 43, wherein the time dependent QoS request information is received from a communication network control element or communication network control function including one of a network exposure function, an assistance network function associated to the data communication, a time sensitive communication and time synchronization function, or from an application function network element or application function network function requesting the data communication.
Example 45. A method for use in a third communication network control element or third communication network control function configured to manage a communication session in a communication network, the method comprising
   receiving at least one policy and charging control rule for a communication session, the at least one policy and charging control rule comprising QoS applicability time information,
   generating at least one QoS profile for a communication session by mapping information contained in the received at least one policy and charging control rule to the at least one QoS profile, wherein the at least one QoS profile is applicable at a specific time indicated in the at least one policy and charging control rule, and
   sending the at least one QoS profile to a fourth communication network control element or fourth communication network control function configured to operate as an access network controller for a communication element or communication function.
Example 46. The method according to Example 45, wherein the at least one QoS profile comprises information including at least one of
   a data communication start time, a data communication stop time, a data repetition period for the QoS profile to be applied, a data communication duration, an indication of a data volume to be expected during a time period when the QoS profile is applied, an indication of a data volume to be expected during a time period when the QoS is applied, an error rate when the QoS profile is applied, delay information to be considered when the QoS profile is applied, and a guaranteed bit rate when the QoS profile is applied.
Example 47. The method according to Example 45 or 46, further comprising
   providing, in addition to the QoS profile, traffic pattern information or a timing map for applying the at least one QoS profile.
Example 48. The method according to any of Examples 45 to 47, further comprising
   generating a first QoS profile for the communication session which is applicable at the specific time indicated in the at least one policy and charging control rule, and a second QoS profile for the communication session which is applicable at a time being different to the specific time indicated in the at least one policy and charging control rule, wherein resources for the first QoS profile are different to resources for the second QoS profile.
Example 49. A method for use in a fourth communication network control element or fourth communication network control function configured to operate as an access network controller for a communication element or communication function in a communication network, the method comprising
   receiving at least one QoS profile for a communication session, wherein the at least one QoS profile is applicable at a specific time,
   allocating resources for a communication session according to the received at least one QoS profile, and
   executing a time dependent QoS according to the received at least one QoS profile in the specific time.
Example 50. The method according to Example 49, wherein the at least one QoS profile comprises information including at least one of
   a data communication start time, a data communication stop time, a data repetition period for the QoS profile to be applied, a data communication duration, an indication of a data volume to be expected during a time period when the QoS is applied, an error rate when the QoS profile is applied, delay information to be considered when the QoS profile is applied, and a guaranteed bit rate when the QoS profile is applied.
Example 51. The method according to Example 49 or 50, further comprising
   receiving, in addition to the at least one QoS profile, traffic pattern information or a timing map for applying the at least one QoS profile, and
   in case traffic pattern information is received, formulating a timing map for applying the at least one QoS profile on the basis of the traffic pattern information.
Example 52. The method according to any of Examples 49 to 51, further comprising
   receiving a first QoS profile for the communication session which is applicable at the specific time indicated in the at least one policy and charging control rule, and a second QoS profile for the communication session which is applicable at a time being different to the specific time indicated in the at least one policy and charging control rule, wherein resources for the first QoS profile are different to resources for the second QoS profile, and
   switching between an allocation of resources for a communication session according to the first QoS profile and an execution of a time dependent QoS according to the first QoS profile and an allocation of resources for a communication session according to the second QoS profile and an execution of a time dependent QoS according to the second QoS profile according to timing information for applying a corresponding QoS profile.
Example 53. A computer program product for a computer, including software code portions for performing the steps of any of Examples 27 to 32, any of Examples 33 to 40, any of Examples 41 to 48, or any of Examples 49 to 52 when said product is run on the computer.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

Although the present disclosure has been described herein before with reference to particular embodiments thereof, the present disclosure is not limited thereto and various modifications can be made thereto.

## Claims

1. An apparatus for use by an application function network element or application function network function of a communication network, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to determine, for a data communication to be conducted with at least one communication element or communication function, traffic pattern information indicating a time setting for the data communication and quality of service, QoS, information to be provided for the data communication, and
to send, to a communication network control element or communication network control function, a request for providing resources at a specified time according to the determined traffic pattern information.

2. The apparatus according to claim 1, wherein the request comprises communication related information and at least a first set of QoS related information to be considered during a time specified in the communication related information, wherein
the communication related information comprises at least one of
a data communication start time, a data communication stop time, a data communication periodicity, a data communication direction, a data size indication,
and the QoS related information comprises at least one of
requested bandwidth, an error rate, delay information, a guaranteed bit rate.

3. The apparatus according to claim 2, wherein the request further comprises a second set of QoS related information to be considered during a time being different to the time specified in the communication related information.

4. The apparatus according to claim 2 or 3, wherein the request comprises communication related information and QoS related information for a data communication with one communication element or communication function, or the request comprises a plurality of communication related information sets and QoS related information sets for a plurality of data communications with a plurality of communication elements or communication functions.

5. An apparatus for use by a first communication network control element or first communication network control function of a communication network, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to receive a request for providing resources at a specified time according to traffic pattern information for a data communication to be conducted with at least one communication element or communication function, the traffic pattern information indicating a time setting for the data communication and QoS information to be provided for the data communication,
to derive, from the request, time dependent QoS request information allowing a policy control function of the communication network to determine policy and charging rules for the data communication, and
to deliver the derived time dependent QoS request information to the policy control function of the communication network.

6. The apparatus according to claim 5, wherein the request comprises communication related information and at least a first set of QoS related information to be considered during a time specified in the communication related information, wherein
the communication related information comprises at least one of
a data communication start time, a data communication stop time, a data communication periodicity, a data communication direction, a data size indication,
and the QoS related information comprises at least one of
requested bandwidth, an error rate, delay information, a guaranteed bit rate.

7. The apparatus according to claim 6, wherein the at least one memory and the instructions are configured to, with the at least one processing circuitry, cause the apparatus at least:
to derive the time dependent QoS request information by converting information included in the communication related information and the QoS related information of the request into time dependent QoS request information.

8. An apparatus for use by a second communication network control element or second communication network control function acting as a policy control function of a communication network, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to receive time dependent QoS request information indicating resources for a data communication with at least one communication element or communication function,
to determine at least one policy and charging control rule for a communication session on the basis of the time dependent QoS request information, the at least one policy and charging control rule comprising QoS applicability time information, and
to forward the at least one policy and charging control rule to a third communication network control element or third communication network control function configured to manage the communication session.

9. The apparatus according to claim 8, wherein the at least one policy and charging control rule request comprises information including at least one of
a data communication start time, a data communication stop time, a data repetition period for a QoS to be applied, a data communication duration, an indication of a data volume to be expected during a time period when the QoS is applied, an error rate, delay information, a guaranteed bit rate.

10. An apparatus for use by a third communication network control element or third communication network control function configured to manage a communication session in a communication network, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to receive at least one policy and charging control rule for a communication session, the at least one policy and charging control rule comprising QoS applicability time information,
to generate at least one QoS profile for a communication session by mapping information contained in the received at least one policy and charging control rule to the at least one QoS profile, wherein the at least one QoS profile is applicable at a specific time indicated in the at least one policy and charging control rule, and
to send the at least one QoS profile to a fourth communication network control element or fourth communication network control function configured to operate as an access network controller for a communication element or communication function.

11. The apparatus according to claim 10, wherein the at least one QoS profile comprises information including at least one of
a data communication start time, a data communication stop time, a data repetition period for the QoS profile to be applied, a data communication duration, an indication of a data volume to be expected during a time period when the QoS profile is applied, an indication of a data volume to be expected during a time period when the QoS is applied, an error rate when the QoS profile is applied, delay information to be considered when the QoS profile is applied, and a guaranteed bit rate when the QoS profile is applied.

12. An apparatus for use by a fourth communication network control element or fourth communication network control function configured to operate as an access network controller for a communication element or communication function in a communication network, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to receive at least one QoS profile for a communication session, wherein the at least one QoS profile is applicable at a specific time,
to allocate resources for a communication session according to the received at least one QoS profile, and
to execute a time dependent QoS according to the received at least one QoS profile in the specific time.

13. The apparatus according to claim 12, wherein the at least one memory and the instructions are configured to, with the at least one processing circuitry, cause the apparatus at least:
to receive, in addition to the at least one QoS profile, traffic pattern information or a timing map for applying the at least one QoS profile, and
in case traffic pattern information is received, to formulate a timing map for applying the at least one QoS profile on the basis of the traffic pattern information.

14. A method for use in a first communication network control element or first communication network control function of a communication network, the method comprising
receiving a request for providing resources at a specified time according to traffic pattern information for a data communication to be conducted with at least one communication element or communication function, the traffic pattern information indicating a time setting for the data communication and QoS information to be provided for the data communication,
deriving, from the request, time dependent QoS request information allowing a policy control function of the communication network to determine policy and charging rules for the data communication, and
delivering the derived time dependent QoS request information to the policy control function of the communication network.

15. A method for use in a second communication network control element or second communication network control function acting as a policy control function of a communication network, the method comprising
receiving time dependent QoS request information indicating resources for a data communication with at least one communication element or communication function,
determining at least one policy and charging control rule for a communication session on the basis of the time dependent QoS request information, the at least one policy and charging control rule comprising QoS applicability time information, and
forwarding the at least one policy and charging control rule to a third communication network control element or third communication network control function configured to manage the communication session.
